# EUROPEAN PATENT SPECIFICATION

(11) **EP 4 398 636 B1**
(45) Date of publication and mention of the grant of the patent: **20.05.2026**
(21) Application number: 22864463.9
(22) Date of filing: 29.08.2022
(51) Int. Cl.: H04W 40/12, H04W 4/38, H04W 4/80, H04W 88/04, H04W 40/32, H04W 84/10, H04W 84/18, H04L 61/5069, H04W 4/08, H04W 40/22, H04L 41/0806, H04L 41/0853, H04L 41/0893, H04L 41/12, H04W 88/06, H04W 4/70

(54) **DATA COLLECTION APPARATUS AND METHOD FOR CONTROLLING SAME**
DATENSAMMELVORRICHTUNG UND VERFAHREN ZUR STEUERUNG DAVON
APPAREIL DE COLLECTE DE DONNÉES ET SON PROCÉDÉ DE COMMANDE

(30) Priority: 31.08.2021 JP 2021141690
(43) Date of publication of application: 10.07.2024
(73) Proprietor: T & D Corporation, Nagano 390-0852 (JP)
(72) Inventor: MOROZUMI Akio, Matsumoto-shi, Nagano 390-0852 (JP); SEGI Chiaki, Matsumoto-shi, Nagano 390-0852 (JP)
(74) Representative: Körber, Martin Hans
(86) International application number: PCT/JP2022/032324
(87) International publication number: WO 2023/032880

(56) References cited:
- EP-A2- 2 999 297
- WO-A1-2020/196811
- JP-A- 2014 086 776
- JP-A- 2018 157 495
- JP-A- 2020 174 380
- US-A1- 2012 322 466
- US-A1- 2024 365 131

## Description

### Technical Field

The present invention relates to a data collection apparatus and a method for controlling the same.

### Background Art

A system disclosed in International Publication WO2020/196811 includes a plurality of communication apparatuses, which each include a first communication unit, and a first information processing apparatus that is capable of connecting to each of the plurality of communication apparatuses using a second communication unit. The first information processing apparatus includes a function that virtually constructs a first communication network from the first communication units using identification information of the plurality of communication apparatuses that has been acquired via the second communication unit, and a function that sets first setting information, which is for communication according to the virtually constructed first communication network, via the second communication unit in a communication apparatus that controls the first communication network.
Related technology for data collection in communication systems is disclosed in WO 2020/196811 A1, US 2012/322466 A1 and EP 2999297 A2.

### Summary of Invention

It would be desirable to configure one or a plurality of communication networks, such as a sensor network, that include a data collection apparatus, a plurality of terminals, a repeater, and the like flexibly in keeping with its environment or dynamically in keeping with changes in environment, based on environment and
conditions in which the networks are installed, for example, the communication environment, the needs of applications, and user needs. The present invention is defined by the enclosed claims. In the following description, embodiments which are not covered by the claims are to be considered as examples necessary for understanding the invention.

One aspect of the present invention is a data collection apparatus that constructs a sensor network as a base terminal (master device, parent terminal) and collects data from sensors via terminals that act as remote terminals (slave devices, child terminals). The data collection apparatus includes a first communication device capable of communicating directly, or via at least one repeater (relay device), with the plurality of remote terminals that each acquire data from a sensor, and a memory for storing identification information. The identification information includes first identification information, which is common to and groups at least some out of the plurality of terminals and at least one repeater (groups at lease a part of a set (a whole) of the plurality of terminals and at least one repeater), and second identification information for individually identifying each out of the grouped plurality of terminals and the at least one repeater. The second identification information may be information that is independent of the first identification information, or may be information produced by adding an element or elements that enables unique identification (individual information) to the first identification information. The data collection apparatus further includes a first communication control device that is configured to control communication with the plurality of terminals and the at least one repeater via the first communication device. The first communication control device includes a first communication mode (first communication controller) for communicating with the plurality of terminals and the at least one repeater using the first identification information and a second communication mode (second communication controller) for individually communicating with the plurality of terminals and the at least one repeater using the second identification information.

The first communication control device further includes: a first call controller (first call function) that is configured to call, using the first communication mode, the plurality of terminals and the at least one repeater regardless of whether there has been a response, and acquire the second identification information and a reception level of each of the plurality of terminals and the at least one repeater that have responded; a second call controller (second call function) that is configured to call, using the second communication mode, via the at least one repeater from which the second identification information has been obtained, at least the plurality of terminals regardless of whether there has been a response using the first identification information, and acquire the second identification information and a reception level of each of the plurality of terminals that have responded; and a sampling controller (sampling function) that is configured to communicate, using the second communication mode, on a route that is set based on the reception levels acquired by the first call controller and the second call controller, directly or via the at least one repeater with each of the plurality of terminals that have been grouped using the first identification information, and acquire data from the sensors of the plurality of terminals that have been grouped by the first identification information. If there is another repeater capable of responding to the first identification information, the at least one repeater may call not just the plurality of terminals but also other one or more repeaters and acquire the second identification information and the signal level of each of the other one or more repeaters that responded.

By assigning common first identification information for grouping at least some of the plurality of slave devices and repeaters, it is possible to construct a specified group that can be called by the data collection apparatus using the first identification information, even in an environment where there are many remote terminals and many repeaters. In addition, the data processing apparatus includes the first communication mode that is capable of communicating with the grouped plurality of terminals and the at least one repeater collectively using the first identification information, and a second communication mode that is capable of communicating individually with the grouped plurality of terminals and the at least one repeater using the second identification information. This means that by calling the plurality of terminals and the at least one repeater regardless of whether there has been a response using the first communication mode via the first call controller and acquiring the second identification information and the reception levels of a plurality of terminals that have responded to the call, the data collection apparatus can identify terminals and/or repeaters with which the data collection apparatus can directly communicate, out of the grouped terminals and/or repeaters. Also, by calling, in the second communication mode and using the second call controller, a plurality of terminals or other repeaters regardless of whether there has been a response using the first identification information via at least one repeater whose second identification information has been obtained, and acquiring the second identification information and the signal level of the plurality of terminals that responded (or further including other repeaters that responded), it is possible for the data collection apparatus to identify terminals with which communication can be performed via the repeater, out of the grouped terminals. This means that the data collection apparatus can automatically and flexibly or dynamically set communication routes where a sufficient reception level can be achieved for the grouped remote terminals directly or via one or more repeaters.

The data collection apparatus may further include a general-purpose second communication device capable of communicating with a general-purpose information processing apparatus and a second communication control device that is configured to acquire group information, which includes the first identification information and the second identification information of the plurality of terminals and the at least one repeater grouped by the first identification information, via the second communication device and store the group information in the memory. The functions as the first communication control device and the second communication control device may be provided by a shared (single or common) communication control device. Examples of general-purpose information processing apparatuses include a tablet terminal and a smartphone terminal. The first communication device (first communication function) may include a device (apparatus or function) that performs specific low-power wireless communication, and the second communication device (second communication function) may include a device (apparatus or function) that performs BLE (Bluetooth (registered trademark) Low Energy) communication.

Another aspect of the present invention is a terminal (remote terminal, slave terminal, child terminal) including: a sampler (data acquisition function) that is configured to acquire data from a sensor; and a first communication device capable of communicating with a data collection apparatus (base terminal, master terminal) directly or via at least one repeater. The terminal further includes: a memory for storing common first identification information for grouping other terminals and the at least one repeater with the terminal, and second identification information that is unique (individual information) to the terminal; and a first communication control device that is configured to control communication via the first communication device. The first communication control device includes: a first response controller (first response function) that is configured to send a response including the second identification information to a call with the first identification information received via the first communication device; and a second response controller (second response function) that is configured to send a response including the data from the sensor to a call with the second identification information that has been received via the first communication device. By these terminals, as remote terminals, and one or more repeaters that have been grouped in advance, a sensor network may be provided in which routes can be dynamically set by the data collection apparatus described above as a base terminal (master terminal).

This terminal may further include a general-purpose second communication device (second communication function) capable of communicating with a general-purpose information processing apparatus and a second communication control device (acquisition function) that is configured to acquire grouping information, which includes the first identification information and the second identification information, via the second communication device and store the grouping information in the memory. The functions as the first communication control device and the second communication control device of this terminal may be provided by a shared (single or common) communication control device.

Yet another aspect of the present invention is a repeater including a first communication device capable of relaying communication between a plurality of terminals, which each acquire data from a sensor, and a data collection apparatus. The repeater further includes: a memory for storing common first identification information for grouping the plurality of terminals and the repeater, and second identification information that is unique (individual information) to the repeater; and a first communication control device that is configured to control communication via the first communication device. The first communication control device includes: a first communication mode (first communication controller) for communicating with the plurality of terminals using the first identification information; and a second communication mode (second communication controller) for individually communicating with the plurality of terminals using the second identification information. The first communication control device of the repeater may communicate with one or more other repeaters in addition to the plurality of terminals using the first communication mode and may communicate individually with one of more other repeaters in the second communication mode.

The first communication control device further includes: a first response controller (first response function) that is configured to send a response including the second identification information, to a call with the first identification information that has been received via the first communication device; a first repeat controller (first relay controller, first relay function) that is configured to call, according to a request from the data collection apparatus that is the base terminal (master terminal), at least the plurality of terminals regardless of whether there has been a response using the first identification information in the first communication mode, acquire the second identification information and a reception level of at least the plurality of terminals that have responded, and send the second identification information and the reception level in reply to the data collection apparatus; and a second repeat controller (second relay controller, second relay function) that is configured to call one out of the plurality of terminals in the second communication mode using the second identification information that has been indicated from the data collection apparatus that is the base terminal, acquire data from a sensor, and send the data in reply to the data collection apparatus. This repeater can construct a sensor network in which routes are dynamically set by the data collection apparatus described above as the base terminal including the terminals that have been grouped in advance as the remote terminals. If there is another repeater or repeaters that can respond to the first identification information, the repeater may call not only the plurality of terminals but also the one or more other repeaters in the first communication mode and may acquire the second identification information and the reception level of one or more other repeaters that respond.

The repeater may further include a general-purpose second communication device (second communication function) capable of communicating with a general-purpose information processing apparatus; and a second communication control device (acquisition function) that is configured to acquire grouping information, which includes the first identification information and the second identification information, via the second communication device and store the grouping information in the memory of the repeater. The functions as the first communication control device and the second communication control device of the repeater may be provided by a shared (single or common) communication control apparatus.

Yet another aspect of the present invention is a system including: the data collection apparatus described above; a plurality of the terminals that communicate with the data collection apparatus as a base terminal, and at least one repeater that relays communication with the data collection apparatus as the base terminal and the plurality of terminals as remote terminals. The base terminal, the plurality of remote terminals, and the at least one repeater each include a general-purpose second communication device capable of communicating with a general-purpose information processing apparatus, the plurality of remote terminals and the at least one repeater each include a communication control device that acquires grouping information, which includes the first identification information and the second identification information, via the second communication device and stores the grouping information in the memory, and the data collection apparatus (base terminal, master terminal) includes a communication control device that is configured to acquire, via the second communication device, group information including the first identification information and the second identification information of the plurality of terminals and the at least one repeater, and store the group information in the memory of the data collection apparatus.

The system may further include an information processing apparatus that includes the general-purpose second communication device and a control device that controls communication by the second communication device, and the control device may include a network configurator. The network configurator may execute: establishing communication with (establishment function) and identifying each of the data collection apparatus, the plurality of terminals, and the at least one repeater via the second communication device; grouping (grouping function) by assigning the first identification information to at least a part of a set of (a part of a whole of) the data collection apparatus, the plurality of terminals, and the at least one repeater that have been identified; supplying (first supplying function) the grouping information, which includes the common first identification information and the individual second identification information, to the plurality of terminals and the at least one repeater that have been grouped; and supplying (second supplying function) the group information, which includes the first identification information, and the second identification information of the plurality of terminals and the at least one repeater that have been grouped, to the grouped data collection apparatus.

Yet another aspect of the present invention is a control method for controlling a data collection apparatus, which includes a first communication device capable of communicating with a plurality of terminals, which each acquire data from a sensor, directly or via at least one repeater. The data collection apparatus includes: a memory for storing common first identification information for grouping at least a part of a set of the plurality of terminals and the at least one repeater, and second identification information for individually identifying each out of the grouped plurality of terminals and the at least one repeater; and a communication control device that controls communication via the first communication device. The communication control device includes a first communication mode for communicating with the plurality of terminals and the at least one repeater using the first identification information and a second communication mode for individually communicating with the plurality of terminals and the at least one repeater using the second identification information. The control method includes:
calling, by the communication control device, using the first communication mode, the plurality of terminals and the at least one repeater regardless of whether there has been a response, and acquiring the second identification information and a reception level of each of the plurality of terminals and the at least one repeater that have responded;
calling, using the second communication mode, via the at least one repeater from which the second identification information has been obtained, at least the plurality of terminals regardless of whether there has been a response using the first identification information, and acquiring the second identification information and a reception level of each of the plurality of terminals that have responded (the communication control device may also call other repeaters via a repeater); and
communicating, using the second communication mode, on a route that is set based on the acquired reception levels, directly or via at least one repeater with each of the plurality of terminals that have been grouped using the first identification information, and acquiring data from the sensors of the plurality of terminals that have been grouped by the first identification information.

The data collection apparatus may further include a general-purpose second communication device capable of communicating with a general-purpose information processing apparatus, and the control method may further include acquiring, by the communication control device, group information, which includes the first identification information and the second identification information of the plurality of terminals and the at least one repeater, via the second communication device and storing the group information in the memory.

Yet another aspect of the present invention is a control method for controlling a terminal including a first communication device capable of communicating with a data collection apparatus directly or via at least one repeater. The terminal further includes a memory, which stores common first identification information for grouping other terminals and the at least one repeater with the terminal, and second identification information that is unique (individual information) to the terminal, and a communication control device that controls communication via the first communication device. The control method includes:
Sending, by the communication control device, a response including the second identification information to a call with the first identification information that has been received via the first communication device; and
sending a response, including data from a sensor whose data are collected by the terminal, to a call with the second identification information.

The terminal may further include a general-purpose second communication device capable of communicating with a general-purpose information processing apparatus, and the control method may further include, by the communication control device, acquiring grouping information, which includes the first identification information and the second identification information, via the second communication device and storing the grouping information in the memory.

Yet another aspect of the present invention is a control method for controlling a repeater including a first communication device capable of relaying communication between a plurality of terminals, which each acquire data from a sensor, and a data collection apparatus. The repeater further includes a memory, which stores common first identification information for grouping the plurality of terminals and the repeater, and second identification information that is unique (individual information) to the repeater, and a communication control device that controls communication via the first communication device. The communication control device includes a first communication mode for communicating with the plurality of terminals using the first identification information and a second communication mode for individually communicating with the plurality of terminals using the second identification information. The control method includes:
sending, by the communication control device, a response including the second identification information, to a call with the first identification information that has been received via the first communication device;
calling, according to a request from the data collection apparatus that is the base terminal, at least the plurality of terminals regardless of whether there has been a response using the first communication mode, acquiring the second identification information and a reception level of at least the plurality of terminals that have responded, and sending the second identification information and the signal level in reply to the data collection apparatus (the repeater may call other repeaters in the first communication mode); and
calling one of the plurality of terminals in the second communication mode using the second identification information that has been indicated from the data collection apparatus, acquiring data from the sensor of the terminal, and sending the data in reply to the data collection apparatus. The repeater may also call another repeater in the second communication mode.

The repeater may further include a general-purpose second communication device capable of communicating with a general-purpose information processing apparatus, and the control method may further include, by the communication control device, acquiring grouping information, which includes the first identification information and the second identification information, via the second communication device and storing the grouping information in the memory.

Yet another aspect of the present invention is a method of performing communication in a system including the data collection apparatus described above. The system further includes a plurality of terminals that communicate with the data collection apparatus as a base terminal, and at least one repeater that relays communication between the data collection apparatus as the base terminal and the plurality of terminals as a plurality of remote terminals. Additionally, each of the data collection apparatus, the plurality of terminals, and the at least one repeater include a general-purpose second communication device capable of communicating with a general-purpose information processing apparatus. The method includes the following steps:
Acquiring, by each of the plurality of terminals and the at least one repeater, grouping information, which includes the first identification information and the second identification information, via the second communication device and storing the grouping information in the respective memories; and
acquiring, by the data collection apparatus, group information, which includes the first identification information and the second identification information of the plurality of terminals and the at least one repeater, via the second communication device and storing the group information in the memory of the data collection apparatus.

The system may further include an information processing apparatus that includes the general-purpose second communication device and
the method may further include, by the information processing apparatus:
establishing communication with and identifying each of the data collection apparatus, the plurality of terminals, and the at least one repeater via the second communication device;
grouping by assigning the first identification information to at least a part of a set of the data collection apparatus, the plurality of terminals, and the at least one repeater that have been identified;
supplying the grouping information, which includes the common first identification information and the individual second identification information, to the plurality of terminals and the at least one repeater that have been grouped; and
supplying the group information, which includes the first identification information, and the second identification information of the plurality of terminals and the at least one repeater that have been grouped, to the grouped data collection apparatus.

### Brief Description of Drawings

Fig. 1 is a block diagram depicting a system for configuring a network including a plurality of communication devices.
Fig. 2 is a flowchart depicting a process that configures a network.
Fig. 3 is a diagram depicting one example of a network that is reconfigured dynamically.
Fig. 4 depicts an example process of configuring a group.
Fig. 5 depicts the process of configuring a group, as a continuation of Fig. 4.
Fig. 6 depicts the process of configuring a group, as a continuation of Fig. 5.

### Description of Embodiments

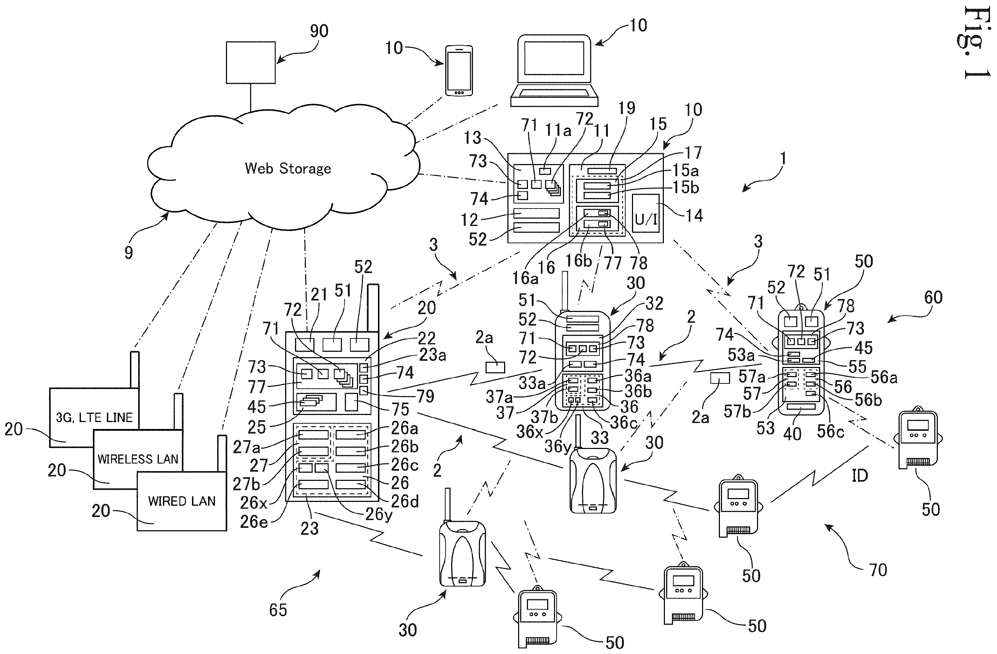

Fig. 1 depicts a system 1 that constructs (configures) a wireless sensor network (WSN) 65. The WSN 65 includes a plurality of communication terminals 60 that configure a group 70 and each include a first communication device (communication unit, communication function, or communication module) 51 capable of transmitting communication messages while relaying or repeating for other communication terminals. The plurality of communication terminals 60 that construct the group 70 include a communication apparatus (data collection apparatus, base terminal, parent terminal or master terminal) 20 that represents the group 70, collects data from the WSN 65, and can connect to a cloud 9, terminals (remote terminals, child terminals, or slave terminals) 50 that each provide measurement data 45 acquired from a built-in or external sensor (attached sensor) 40, and repeaters 30 that are capable of relaying or repeating communication between the base terminal (data collection apparatus) 20 and the remote terminals (terminals) 50.

One example of the first communication device 51 is a specified low-power wireless communication device (or unit) which is used for relaying communication messages 2a including recorded data (measurement data) 45 of the remote terminals 50 to another communication apparatus, such as a repeater 30 or the base terminal 20, then the messages 2a are transferred and uploaded to a server 90 on the Internet 9 or another communication network. The specified low-power wireless communication unit (first communication device) 51 may also be used to set recording conditions (measurement conditions) at the remote terminals 50.

Each communication terminal 60 that constructs the group 70 includes a first communication unit (device) 51 that may be used exclusively for constructing the network 65, and a general-purpose second communication device (communication unit, communication function, or communication module) 52 that can communicate with a general-purpose information processing terminal, such as a notebook personal computer or a smartphone. The system 1 additionally includes a general-purpose information processing apparatus (host apparatus) 10 that can be connected substantially in parallel with the plurality of communication terminals 60 via the second communication units 52 that are provided in the plurality of communication terminals 60. This information processing apparatus (host) 10 does not belong to the network 65. Here, the expression "connected substantially in parallel" means that the communication with the communication terminals 60 is performed at time intervals that do not hinder the processing that forms the group at the host 10, and it is not necessary to perform communication with the communication terminals 60 at the same time.

One example of a second communication unit (second communication apparatus) 52 is a BLE communication unit 52, which makes it possible for the host 10 and the terminal 60 to communicate with each other (i.e., exchange information) by wireless communication 3 according to a specification that has been established as part of Bluetooth (registered trademark) standard. In the present embodiment, the BLE communication unit 52 is used to obtain conditions (such as IDs and frequency channel numbers) for constructing (configuring, forming) the sensor network 65 from the host 10 to enable each remote terminal 50 to communicate with the base terminal 20 and the repeaters 30 using the specified low-power wireless 2.

Although a typical example of an information processing apparatus (host) 10 is a smartphone, the information processing apparatus 10 is not limited to this and may be a personal computer, a tablet computer, or the like. The information processing apparatus 10 includes typical computer resources, including a memory 13 and a processor 11, and also includes communication and processing resources. The host 10 typically includes a BLE (Bluetooth (registered trademark)) communication unit (communication module or second communication device) 52, a cloud connection unit (network connection device or network connection module) 12 that performs communication such as wired LAN, wireless LAN, 3G/LTE communication or the like, the memory 13, the processor 11, and a user interface 14. The processor 11 implements predetermined functions by downloading a program (program product) 11a stored in the memory 13 and operates as a functional module or a functional unit.

The processor 11 includes a function for executing various applications 19, and a network configurator (network environment setting apparatus) 17 that makes settings for grouping at least some of the communication terminals 60 to construct the sensor network 65. The network configurator 17 according to the present embodiment includes a function (group generating module) 15 that generates a group 70 of the communication terminals 60 and a function (feedback module) 16 that feeds back (supplies) information about the group 70 to each communication terminal 60. The program 11a includes instructions for implementing these functions, and the program (program product) 11a can be provided by being recorded in a memory or another recording medium.

The function (module) 15 for generating the group 70 includes: a function 15a (identification function or identification module) that establishes communication with and identifies, via the second communication unit 52, the communication terminals 60 present within the communication range of the second communication unit 52, that is, a part of a set (whole, master group) of at least one data collection apparatus (base terminal or master terminal) 20, a plurality of remote terminals (slave terminals) 50, and at least one repeater (relay terminal) 30; and a function 15b of assigning first identification information 71 to at least a part of the set of the at least one base terminal 20, remote terminals 50, and the at least one repeater 30 that have been identified ("discovered) to group them. The identification function 15a communicates with each communication terminal 60, including the at least one base terminal 20, the remote terminals 50, and the at least one repeater 30 via the second communication unit 52, and acquires unique identification information (unique IDs) 74 that are set in advance at each communication terminal 60. Each unique ID 74 includes a type, serial number, and the like of each terminal 60 and may include information for communicating with a specified terminal 60 via the second communication unit 52, but the unique ID is sufficient to include information that can identify each terminal 60.

The grouping function (module) 15b performs grouping by assigning identification information (first identification information" or a "group ID) 71, which is common to the communication terminals 60 to be included in a group 70, to one base terminal 20 that represents the group 70 and has been selected by the user, a plurality of remote terminals 50 for that base terminal 20, and one or a plurality of repeaters 30, out of the terminals 60 that have been identified. The group ID 71 is common information for the terminals 60 to be included in the group 70, and is unique identification information that distinguishes from the other terminals 60 included or to be included in other groups. The group ID 71 may be automatically selected by the host 10, or may be selected by the user.

In addition, to configure the network 65, identification information (second identification information or individual IDs) 72, which are unique to each terminal and enable terminals to be called individually, are set for each remote terminal 50 and each repeater 30 that are called by the base terminal 20. The individual IDs 72 may be any type of information so long as the information is unique to each terminal 60 within the group 70. In the present embodiment, the individual IDs 72 of the remote terminals 50 are referred to as "remote terminal #1", "remote terminal #2", or simply "#1", "#2", and the like, and the individual IDs 72 of the repeaters 30 are referred to as "repeater #R1", "repeater #R2", or simply "#R1", "#R2", and the like. Accordingly, in the present embodiment, by combining a group ID 71 and an individual ID 72, it is possible to generate identification information that enables individual access to a communication terminal 60 even included in another group. The individual ID 72 may itself be identification information that enables each communication terminal 60 to be individually (independently) accessed. In addition, the grouping function 15b may determine (select or set) other information, such as a frequency channel number 73, for communication via the first communication units 51 between the communication terminals 60 selected to construct the group 70.

The function (module) 16, which supplies information on the group 70, includes: a function (first supplying function) 16a that supplies grouping information (information for inclusion in the group) 78 including the common first identification information (group ID) 71 and the individual second identification information (individual IDs) 72 to the plurality of remote terminals 50 and at least one repeater 30 respectively that have been grouped; and a function (second supplying function) 16b that supplies group information (information for configuring group) 77 including the first identification information (group ID) 71 and a plurality of second identification information of the plurality of remote terminals 50 and the at least one repeater 30 that have been grouped to the data collection apparatus (base terminal) 20 in the same group.

Based on the group information 77 obtained by the BLE communication unit 52, the data collection apparatus (base terminal) 20 configures a communication network using the specified low power (specific low power) wireless communication unit 51, and causes this network to function as a sensor network 65. In addition, the base terminal 20 also functions as a device that uploads messages 2a, which include recorded data 45 that have been uploaded from remote terminals 50 using the specific low power wireless 2, to a cloud service (WebStorage) server 90 on the Internet 9. The base terminal 20 includes a wireless function that is compliant with two standards, that is, the specified low-power (400 MHz) wireless communication unit that functions as the first communication device 51 and the BLE (2.4 GHz) communication unit 52 that functions as the second communication device 52, and further includes a cloud connection device (third communication device or network connection device) 21 that performs wired LAN, wireless LAN, or 3G-LTE communication as a function for connecting to the Internet 9. The base terminal 20 is equipped with computer resources including a memory 22, which stores various data, and a processor 23. The processor 23 implements predetermined functions by downloading a program (program product) 23a recorded in the memory 22, and operates as functional modules or functional units. The memory 22 also functions as a region that stores the group information 77 including the first identification information (group ID) 71 and the individual second identification information (individual IDs) 72 of the plurality of remote terminals 50 and the at least one repeater 30 that have been grouped by the group ID 71.

The processor 23 includes a function as a second communication control device 27 that is configured to control communication via a second communication unit (communication device) 52. The second communication control device 27 includes a response function (response module) 27a that is configured to provide the unique ID 74 to the host 10, and an acquisition function (acquisition module) 27b that is configured to acquire information (group information) 77 of the group configured by the host 10 and store the group information in the memory 22. The acquisition function 27b acquires, via the second communication unit 52, the group information 77 including the first identification information (group ID) 71 that is common to the group and the individual second identification information (individual IDs) 72 of the plurality of remote terminals 50 and the at least one repeater 30 that have been grouped by the group ID 71 from the host 10 and stores the group information 77 in the memory 22. The group information 77 may include other information for communication with other terminals 60 in the group, for example information such as a frequency channel number 73.

The processor 23 further includes a function as a first communication control device 26 that is configured to control communication with the plurality of remote terminals 50 and at least one repeater 30 via the first communication unit (first communication device) 51. The first communication control devices 26 includes functions that is configured to communicate using: a first communication mode (first communication controller) 26x that communicates with the plurality of remote terminals 50 and the at least one repeater 30 using the group ID (first identification information) 71; and a second communication mode (second communication controller) 26y that individually communicates with the plurality of remote terminals 50 and the at least one repeater 30 using the individual IDs (second identification information) 72. To communicate with an individual remote terminal 50 via one or more repeaters 30, the second communication mode 26y includes communication using a combination of the individual ID(s) 72 of any repeater(s) 30 on the route and the individual ID 72 of the target remote terminal 50.

The first communication control device 26 further includes: a first call controller (first call function or direct call module) 26a that is configured to directly call the remote terminals 50 and the at least one repeater 30 in the group 70 collectively using the first communication mode 26x; and a second call controller (second call function or indirect call module) 26b that is configured to access a repeater 30, using the second communication mode 26y, that was responded by the first call controller and collectively call the remote terminals 50 and the other repeaters 30 in the group 70 via that repeater 30 using the first communication mode 36x of that repeater 30. The first call controller 26a directly calls, via the first communication unit 51, the plurality of remote terminals 50 and at least one repeater 30 using the group ID 71 acquired as the group information 77 regardless of whether there has been a response, acquires the individual IDs 72 and reception levels 79 of the plurality of remote terminals 50 and the at least one repeater 30 that responded, and stores the information in the memory 22. One example of the reception level 79 is signal strength, which may be radio field strength, signal quality such as SNR (signal-to-noise ratio), or any other suitable index.

For each repeater 30 that has responded to the call described above, the second call controller 26b uses the first communication mode 36x of that repeater 30 to call a plurality of remote terminals 50 using the group ID 71 regardless of whether there has been a response, and acquires one or more the individual IDs 72 and one or more reception levels 79 of one or more remote terminals 50 that have responded. In addition to the one or more individual IDs 72 of one or more remote terminals 50 that have responded to the collective call, one or more individual IDs 72 of one or more any other repeaters 30 that have responded may be acquired.

The first communication control device 26 further includes a function (routing device or routing module) 26c that is configured to perform routing based on the information obtained by the call controllers 26a and 26b described above. The routing device 26c may set a route with priority to a route where the acquired reception levels 79 are high, may set a route with priority to a route where the number of repeaters 30 passed through is low, or may set a route in accordance with other rules.

The first communication control device 26 further includes a sampling controller (sampling function or sampling module) 26d that is configured to individually call remote terminals 50 according to the route selected by the routing device and acquire the measurement data 45. Using the second communication mode 26y, the sampling controller 26d communicates on a configured route, i.e., either directly or via at least one repeater, with each of the plurality of remote terminals 50 using the individual IDs 72 and acquires the data 45 from the sensors 40. The collected data 45 may be temporarily stored in the memory 22. The first communication control device 26 may also include an upload function 26e for uploading the measurement data 45 of the messages 2a transferred from the remote terminals 50 to the cloud 9 via the cloud connection device 21.

The remote terminals 50 are one type of communication terminals 60 that construct a communication network, in the present embodiment a sensor network 65, that transmit communication messages while relaying via the repeater 30 or the base terminal 20. Each remote terminal 50 includes the first communication unit (first communication device) 51 for long-distance communication that is suited to constructing the sensor network 65 and the general-purpose second communication unit (second communication device) 52, is capable of communicating with the base terminal 20 and the repeaters 30, and is also capable of communicating with the host 10 so long as the host 10 is within the communication distance range of the second communication device 52.

Each remote terminal 50 includes a sensor 40 that measures temperature, humidity, or the like, a built-in memory 55 for storing measured values (measurement data) 45 and the like, a specified low-power (400 MHz) wireless communication unit that functions as the first communication device 51, a BLE (2.4 GHz) communication unit that functions as the second communication device 52, and a processor 53 that controls such components. The remote terminal 50 may include, in addition to the sensor 40 or in place of the sensor 40, an interface capable of connecting to an external sensor. Each remote terminal 50 may be a battery-powered terminal with a built-in small battery that can be installed and used in a variety of locations, may be a mobile terminal so long as communication with the base terminal 20 or a repeater 30 can be achieved, or may be a terminal for monitoring environment whose location changes, as happens with a container or cargo at an automated warehouse.

Each remote terminal 50 includes computer resources including the memory 55 and the processor 53. The processor 53 implements predetermined functions by downloading a program (program product) 53a recorded in the memory 55, and operates as functional modules or functional units. The memory 55 may be used as a region for storing the common group ID (first identification information) 71 for grouping other terminals (remote terminals) 50 and at least one repeater 30 with this remote terminal 50 and the individual ID (second identification information) 72 that is unique to this remote terminal 50. The processor 53 includes a function as a second communication control device 57 that controls communication via the second communication unit 52. The second communication control device 57 has a response function (response module) 57a that provides the unique ID 74 to the host 10, and an acquisition function (acquisition module) 57b that acquires information (grouping information) 78 grouped by the host 10 and stores the grouping information in the memory 55. The acquisition function 57b is configured to acquire, via the second communication unit 52, the grouping information 78, which includes the first identification information (group ID) 71 that is common to the group and the second identification information (individual ID) 72 that is individual (unique) to the remote terminal 50, from the host 10 and store such acquired information in the memory 55. The grouping information 78 may include other information for communication with the terminals 60 in the group, such as the frequency channel number 73.

The processor 53 further includes a sampler (data acquisition function, sampling function, or sampling module) 56c that is configured to acquire the data 45 from the sensor 40 at predetermined timing and a first communication control device 56 that is configured to control communication via the first communication device 51. The first communication control device 56 includes a first response controller (response function or first response module) 56a that is configured to send a response including the individual ID (second identification information) 72 to a call with the group ID (first identification information) 71 that was received via the first communication unit 51, and a second response controller (response function or second response module) 56b that is configured to send a response including the data 45 from the sensor 40 to a call with the individual ID (second identification information) 72 that was received via the first communication unit 51. The first response controller 56a responds when a collective call that uses the group ID 71 has been received from the base terminal 20 and/or the repeaters 30. The second response controller 56b responds when an individual call with the individual ID 72 has been received from the base terminal 20 and/or the repeater 30. Accordingly, the remote terminals 50 are each capable of performing processing in units of the group 70 based on the received ID 71 or 72 with no need to recognize whether the call was from the base terminal 20 or one of the repeaters 30 belonging to that group 70, and can construct the sensor network 65 and upload the measurement data 45 from each sensor 40 to the network 65 regardless of the network configuration upstream and without having information on the network configuration.

The sampling function 56c acquires the measurement data 45 from an internal sensor 40 or an external sensor either periodically or at timing that is set in advance. The sampling timing of the sampling function 56c may be controlled by commands transferred using the individual ID 72 directly from the base terminal 20 or via a repeater 30. The sensor 40 may be built-in or may be externally attached, and may be any sensor that measures one physical quantity such as temperature, humidity, voltage, current, pulse, illuminance, infrared intensity, or CO₂ concentration. The sensor 40 may include a wide variety of sensors (a plurality of sensors) that measure a plurality of types of physical quantity.

The response controllers 56a and 56b communicate using the first communication unit 51 only when called with a group ID 71 or the individual ID 72. Accordingly, there is no need to periodically check or establish a communication route, which makes it possible to suppress the amount of communication required to upload the measurement data 45 via the sensor network 65. Accordingly, the power consumption of each remote terminal 50 can be suppressed to a minimum level. This means that it is possible to maintain the sensor network 65 for a long time. Also, by including the repeaters 30, a sensor network 65 that covers a wide range (area) can be constructed. **In** addition, a specified low-power wireless communication unit that has low power consumption and is suited for long-distance communication is used as the first communication unit 51. Communication using the specified low-power wireless communication unit 51 does not need to have wide-range applicability, such as communication with general-purpose communication functions such as those provided in the host 10, and it is sufficient to communicate within the sensor network 65 according to a specified protocol or specification. This means that communication can be performed using a protocol or specification that gives highest priority to a specific purpose, for example, reducing power consumption. Once communication on the sensor network 65 has been established, the BLE communication unit 52 may be turned off or the information communication apparatus (host) 10 may be removed to further reduce power consumption.

The BLE communication unit, which is the second communication unit (second communication device) 52, communicates according to a general-purpose protocol with a general-purpose Bluetooth (registered trademark) communication unit 52 installed in the host 10. This means that if predetermined processing, such as pairing, has been performed and the remote terminal 50 is within a distance where BLE communication 3 is possible, the remote terminal 50 can communicate with the host 10 via the BLE communication unit 52. On the other hand, to communicate with the general-purpose host 10, the BLE communication unit 52 performs communication according to a general-purpose specification and protocol, which means that communication is not necessarily performed in accordance with a purpose that has high priority for the user or the system 1, such as reduced power consumption. However, the BLE communication unit 52 is mainly used at the timing when the grouping information 78 is acquired and does not need to be used to maintain the sensor network 65, so that by using the remote terminals 50, power consumed by running the sensor network 65 can be suppressed.

The repeaters 30 are used to relay or repeat messages 2a between the remote terminals 50 and the base terminal 20 and form the sensor network 65. That is, the repeaters 30 can relay communication between the base terminal 20 and the remote terminals 50 to extend the wireless communication distance. Each repeater 30 includes a specified low power (400 MHz) wireless communication unit as the first communication unit (first communication device) 51 and a BLE (2.4 GHz) wireless communication unit as the second communication unit (second communication device) 52. In addition, each repeater 30 includes computer resources including a memory 32 and a processor 33. The processor 33 implements predetermined functions by downloading a program (program product) 33a recorded in the memory 32 and operates as functional modules or functional units. The memory 32 includes a region for storing a common group ID (first identification information) 71 for grouping a plurality of remote terminals 50 and this repeater 30, and an individual ID (second identification information) 72 that is unique to this repeater 30.

The processor 33 includes a function as a second communication control device 37 that is configured to control communication via the second communication unit 52. The second communication control device 37 includes a response function (response module) 37a that is configured to provide the unique ID 74 to the host 10, and an acquisition function (acquisition module) 37b that is configured to acquire information (grouping information) 78 that has been grouped by the host 10. The acquisition function 37b acquires, via the second communication unit 52, the grouping information 78 including the first identification information (group ID) 71 that is common to the group and the second identification information (individual ID) 72 that is individual to this repeater 30 from the host 10 and stores the grouping information 78 in the memory 32. The grouping information 78 may include other information for communication between terminals 60 in the group, such as the frequency channel number 73.

The processor 33 further includes a function as a first communication control device 36 that is configured to control communication via the first communication unit 51. The first communication control device 36 includes: a first communication mode (communication controller) 36x for communicating with a plurality of remote terminals 50 using the group ID (first identification information) 71; and a second communication mode (communication controller) 36y for communicating individually with a plurality of remote terminals 50 using individual IDs (second identification information) 72. The first communication control device 36 further includes: a first response controller (response function or response module) 36a that is configured to send a response including the individual ID (or second identification information) 72 to a call with the group ID (first identification information) 71 that was received via the first communication unit 51; a first repeat controller (relay controller, relay function or first relay module) 36b that is configured to call, according to a request from the base terminal (data collection apparatus) 20 and using the first communication mode 36x, a plurality of remote terminals 50 using the group ID 71 regardless of whether there has been a response, acquires the individual ID 72 and the reception level 79 of each remote terminal 50 that responds, and sends such information in reply to the base terminal 20; and a second repeat controller (second relay controller, relay function or second relay module) 36c that is configured to call any one out of the plurality of remote terminals 50 using the second communication mode 36y using an individual ID 72 designated from the base terminal 20, acquire the data 45 from the sensor 40 of that remote terminal 50, and send the data 45 in reply to the base terminal 20. The first repeat controller 36b may acquire one or more individual IDs 72 of one or more other repeaters 30 that responded to a collective call in the first communication mode 36x, and send such individual IDs 72 in reply to the base terminal 20. The second repeat controller 36c may use the individual ID 72 of another repeater 30 and the individual ID 72 of a remote terminal, which have been designated by a command or the like from the base terminal 20, to individually call a remote terminal 50 via another repeater 30 using the second communication mode 36y.

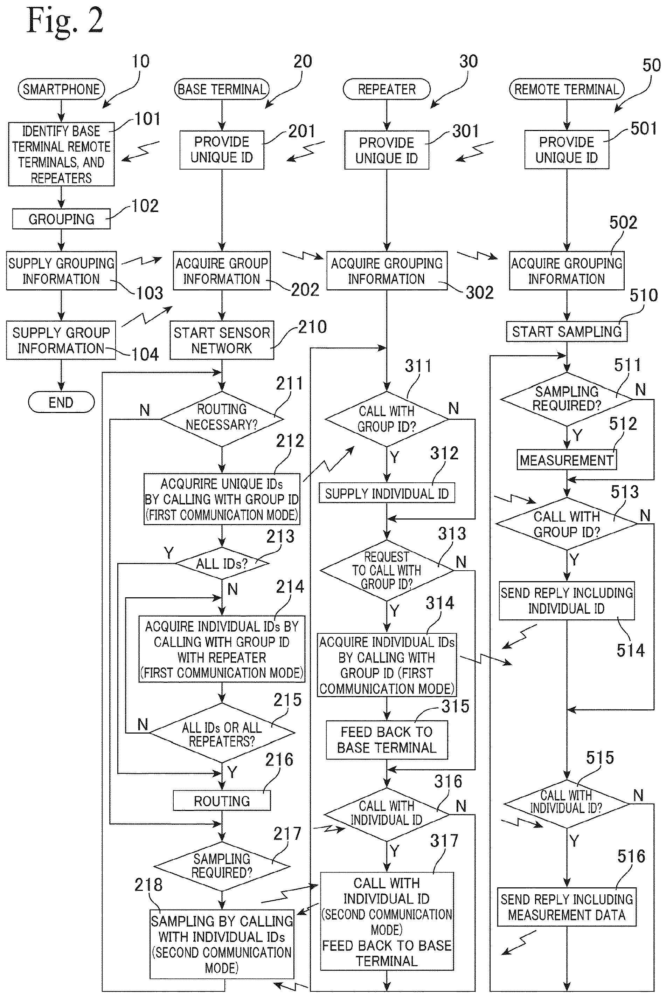

Fig. 2 depicts examples of processes that configure a communication network (sensor network) 65 that includes the data collection apparatus (base terminal, master terminal) 20, a repeater 30, and a remote terminal (slave terminal) 50, split into the respective control methods (control processes) of the terminals 20, 30, and 50. In these processes, first, by the host (e.g. smartphone) 10, a data collection apparatus 20 is selected (designated) for configuring the network 65 as the base terminal, one or a plurality of communication terminals 50 are selected (designated) to be included in the network 65 as remote terminals, further at least one repeater 30 is selected (designated) for repeating communication between such terminals, and grouping is performed by supplying the common first identification information 71 to such terminals by BLE communication using the second communication unit 52. The means for supplying the first identification information 71 is not limited to BLE communication, and other wireless communication, such as infrared communication, or wired communication, such as USB, may be used.

In step 101, the host 10 establishes, via the second communication device (BLE communication unit) 52, communication with each of the data collection apparatus (base terminal) 20, the plurality of remote terminals (terminals) 50, and the at least one repeater 30 and identifies the terminals. In response to this step 101, the base terminal (data collection apparatus) 20 provides (supplies) the unique ID 74 in step 201, the repeater 30 provides the unique ID 74 in step 301, and the remote terminal 50 provides the unique ID 74 in step 501.

In step 102, the host 10 performs grouping by assigning a group ID (first identification information) 71 to at least some (a part, a portion) of the base terminal 20, the remote terminals 50, and the repeaters 30 out of a whole (set, master group) of the base terminals 20, the remote terminals 50, and the repeaters 30 that have been identified using the unique IDs 74. To configure a network, at least one data collection apparatus as the base terminal 20 and one or a plurality of remote terminals 50 are selected, with one or a plurality of repeaters 30 also being selected as necessary. In addition, in step 103, the host 10 supplies (provides) grouping information (information for inclusion in the group) 78 including the group ID (first identification information) 71 that is common to the terminals and individual IDs (second identification information) 72 that are unique to the plurality of remote terminals 50 and the one or more repeaters 30 that have been grouped. In step 104, which is in parallel with or before or after step 103, the host supplies (provides), to the grouped base terminal (data collection apparatus) 20, the group information (information for configuring the group) 77 including the group ID (first identification information) 71 and the plurality of individual IDs (second identification information) 72 of the plurality of remote terminals 50 and the one or plurality of repeaters 30 that have been grouped.

In step 101, the host 10 communicates with a plurality of communication terminals 60 that are present in the range of BLE communication from the host 10 and have performed processing for starting communication, such as pairing. The host 10 acquires, via the BLE communication unit 52, the unique IDs 74 from each of the data collection apparatus 20 that serves as the base terminal, the terminals 50 that serve as remote terminals, and the repeaters 30. The unique IDs 74 may include the type of communication terminal 60, as examples, the data collection apparatus 20 that serves as a base terminal, the terminal 50 that serves as a remote terminal, or the repeater 30, an ID, such as a serial number, for identifying each communication terminal 60, and also information such as the sensor 40 built into a terminal 50 that serves as a remote terminal.

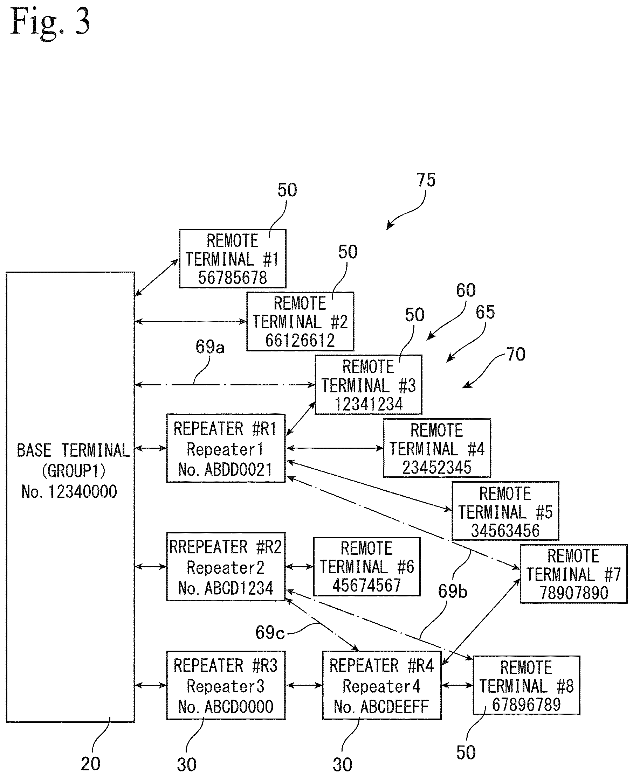

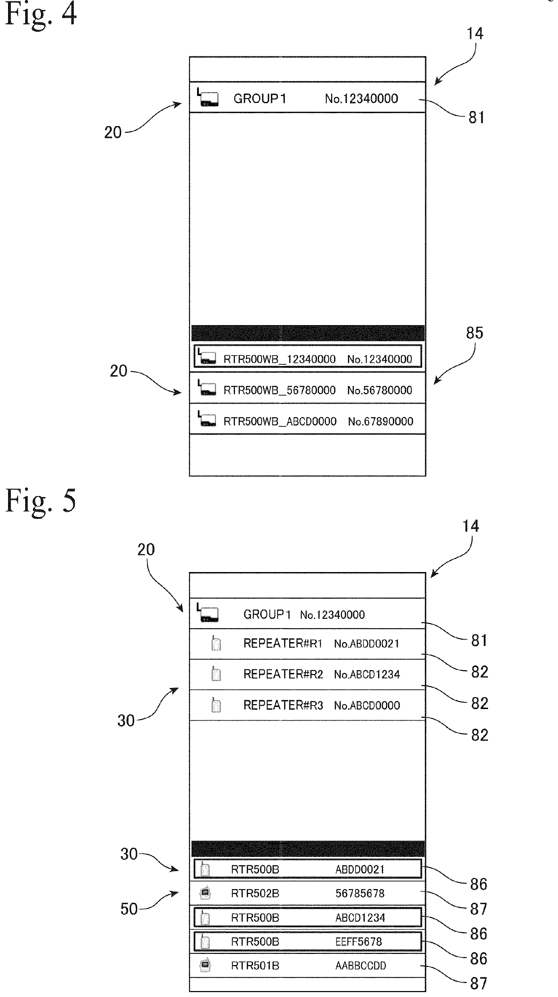

Fig. 3 depicts examples of various communication terminals 60 selected as a group 70 to construct the sensor network 65. FIGS. 4 to 6 depict example operations of the network configurator 17 of the host 10 in step 102 to construct the group 70. First, in FIG. 4, icons 85 of a plurality of data collection apparatuses 20, which are candidates for the base terminal that can communicate using the BLE communication unit 52, are displayed on the user interface (U/I) 14, such as a display or touch panel, of the host 10. The icons 85 may include the unique IDs 74. When the user has selected the unique ID "12340000" out of the icons 85, the data collection apparatus 20 with that unique ID is displayed as an icon 81 of the base terminal 20 of the group 1 and is selected.

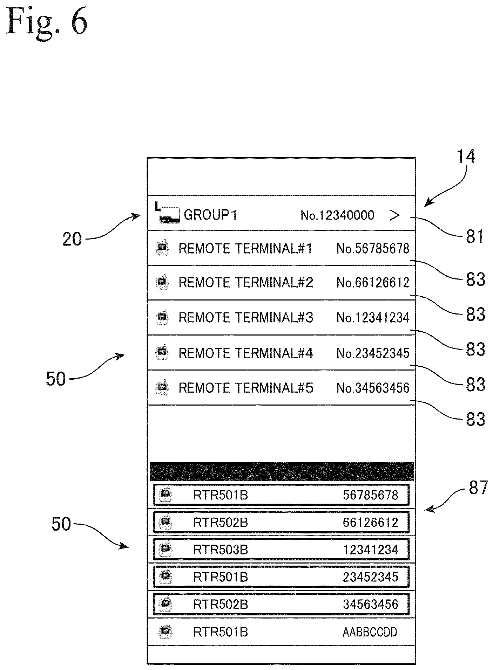

Next, as depicted in Fig. 5, when the user has selected the repeaters 30 to be included in the group 1 out of the icons 86 and 87 of the plurality of repeaters 30 and terminals 50 displayed on the touch panel 14, the selected repeaters 30 are displayed as icons 82 for configuring the group 1. In addition, as depicted in Fig. 6, when the user has selected the remote terminals 50 to be included in the group 1 out of the icons 87 of the plurality of terminals 50 displayed on the touch panel 14, the selected terminals 50 are displayed as icons 83 as the remote terminals 50 for configuring the group 1. Through these operations, the base terminal 20, the repeaters 30, and the remote terminals 50 that construct the group 1 are selected and set, and additionally a group ID 71, for example, "Group 1", that is common to such terminals is set by the host 10. In addition, individual IDs 72, such as #R1 to #R3, are set for each repeater 30 selected as the group 1 with the group ID 71, and individual IDs 72, for example #1 to #5, are set for each remote terminal 50 selected as the group 1.

Returning to Fig. 2, in step 103, based on the grouping process of the network configurator 17 described above, the host 10 supplies the grouping information 78 to each remote terminal 50 and each repeater 30 via the BLE communication unit 52, which is a general-purpose communication means. At each repeater 30, in step 302, the second communication control device 37 acquires the grouping information 78 including the group ID (first identification information) 71 and the individual ID (second identification information) 72 via the BLE communication unit (second communication device) 52 and stores the grouping information 78 in the memory 32. One example of the individual ID 72 included in the grouping information 78 acquired by a repeater 30 is #R1. In step 502, at each remote terminal 50, the second communication control device 57 acquires the grouping information 78 including the group ID (first identification information) 71 and an individual ID (second identification information) 72 via the BLE communication unit (second communication device) 52 and stores the grouping information 78 in the memory 55. One example of the individual ID 72 included in the grouping information 78 acquired by a remote terminal 50 is "#1".

In step 104, the group information 77, which is defined by the grouping described above, is supplied from the host 10 to the data collection apparatus 20, which serves as a base terminal, via the BLE communication unit 52, which is a general-purpose communication means. In step 202, the second communication control device 27 of the base terminal 20 acquires the group information 77 including the group ID (first identification information) 71 and the individual IDs (second identification information) 72 of the grouped terminals 60 via the BLE communication unit (second communication device) 52 and stores the group information 77 in the memory 22. The group ID 71 included in the group information 77 is "Group 1", and the individual IDs 72 are "#R1" to "#R4" of the grouped repeaters 30 and "#1" to "#8" of the grouped remote terminals 50. The group information (information for configuring the group) 77 and the grouping information (information for inclusion in the group) 78 may further include other information used for communication within the group, such as the frequency channel number 73.

At the data collection apparatus (base terminal) 20, once the group information 77 has been acquired and stored in the memory 22, communication with the remote terminals 50 and the repeaters 30 is thereafter performed in the first communication mode 26x or the second communication mode 26y using the specified low-power wireless unit (first communication device) 51. In step 210, processing by the sensor network 65 that is constructed by the terminals 60 included in the group 70 defined by the group information 77 commences. First, in step 211, when it has been determined that processing (routing processing, routing) that automatically sets (resets, reconfigures) a route is necessary, in step 212 and subsequent steps, routing processing is performed using the first communication mode 26x. On the other hand, if it has been determined that the past routing information 75 can be used, in step 217 and subsequent steps, sampling processing is performed using the second communication mode 26y. Routing may be performed as an initialization process of the sensor network 65, may be performed periodically, or may be automatically performed when a change in signal strength during sampling or a change in the communication environment has been detected from other information.

When the routing processing has commenced, in step 212, the first communication control device 26 of the base terminal 20 directly calls a plurality of the remote terminals 50 and at least one repeater 30 regardless of whether there has been a response using the group ID (first identification information) 71 in the first communication mode 26x using the specified low-power wireless unit (first communication device) 51, and acquires the individual IDs (second identification information) 72 and respective reception levels 79 of the plurality of remote terminals 50 and at least one repeater 30 that respond. As one example, in the first communication mode 26x, the base terminal 20 broadcasts a wireless command for search purposes that includes the group ID 71. By issuing a call that includes the group ID 71, which is information unique to the group 70, even if terminals 60 belonging to other groups are present within a response range, such terminals 60 will not respond to the call, which means that a network can be automatically constructed within a unit of group 70. Note that, in step 212, provided that the number of call iterations and consumed power are in a tolerated range, in place of issuing a collective call using the group ID 71, it is possible to call the repeaters 30 and the remote terminals 50 belonging to the group 70 with the individual IDs 72 and check whether there has been a response using a method such as polling. The same also applies to the following steps.

In step 212, a call is issued in the first communication mode 26x by the first communication control device 26, that is, a collective call using the group ID 71, and in step 213, the individual IDs 72 of all of the grouped remote terminals 50 to be included in the group information 77 may be obtained. In this case, the first communication control device 26 may determine that the base terminal 20 is capable of communicating with all the grouped remote terminals 50 and terminate the process of issuing a collective call. On the other hand, when the individual IDs 72 of all of the grouped remote terminals 50 and repeaters 30 cannot be obtained, or when all of the individual IDs 72 have been obtained but the signal strength is insufficient, or alternatively, if a default setting has been made to search for optimal conditions for constructing a network, in step 214, the first communication control device 26 may issue a collective call via one or more repeaters 30. In step 215, the base terminal 20 may acquire the individual IDs 72 of all of the remote terminals 50 and the repeaters 30 that can be accessed directly or indirectly (via at least one repeater) and may acquire signal levels (reception levels) 79 for generating the routing information.

In step 214, the first communication control device 26 selects a repeater 30 out of the individual IDs 72 that responded in step 212, and accesses, using the second communication mode 26y, a repeater 30 from which an individual ID 72 was obtained. The first communication control device 26 also remotely controls that repeater 30, calls a plurality of remote terminals 50 from that repeater 30 in the first communication mode 36x regardless of whether there has been a response using the group ID 71, and acquires the individual IDs 72 and the reception levels (signal levels) 79 of the plurality of remote terminals 50 that respond. The presence or absence of a response may be determined based on the reception level 79. As one example, the repeater 30 broadcasts a wireless command for search purposes including the group ID 71 in the first communication mode 36x. In this step, other repeaters 30 may be called in the same way to acquire the individual IDs 72 of repeaters 30 with which communication can be performed. Note that in step 214, in place of issuing a collective call using the group ID 71, the remote terminals 50 that do not respond to a call from the base terminal 20 or another repeater 30 may be called using their individual IDs 72.

When the individual IDs 72 of all of the remote terminals 50 included in the group information 77 have been obtained in step 215 in response to the collective call via a repeater 30 using the group ID 71 in step 214, the process of issuing a collective call may end. If all of the individual IDs 72 have not been obtained in step 215, the processing may return to step 214 and another repeater 30 that is capable of communication may call a plurality of remote terminals 50 using the group ID (first identification information) 71 regardless of whether a response has been received to acquire the individual IDs (second identification information) 72 and the reception levels 79 of the plurality of remote terminals 50 that respond. Even when some of the individual IDs 72 have not been obtained through collective calls via all of repeaters 30, the process of issuing a collective call may end at the point when collective calls from all of the repeaters 30 with which communication can be performed have ended. If some of individual IDs 72 included in the group information 77 could not be obtained by these collective calls, appropriate error information may be provided to the user via the cloud or the like, and a routing process including issuing collective calls may be repeated at intervals of an appropriate time period until all the individual IDs 72 are obtained. The signal level 79 may be acquired for the individual ID 72 of each remote terminal 50 and repeater 30 included in the communication range of a repeater 30 for the purpose of generating routing information.

When information on the remote terminals 50 and the repeaters 30 with which communication can be directly performed from the base terminal 20 and information on the remote terminals 50 and the repeaters 30 with which communication can be performed via the repeaters 30 have been obtained through these collective calls, based on such information, in step 216, the first communication control device 26 generates, automatically and in accordance with predetermined rules, routing information (route information or network configuration information) 75 for calling individual remote terminals 50 from the base terminal 20. As one example, reference may be made to the reception levels 79 obtained in response to the calls described above and the route for accessing each remote terminal 50 may be set at a route with the highest reception level 79. The rules for routing are not limited to this, and routing may be performed based on a rule whereby the number of passed repeaters 30 is minimized.

After this, when it has been determined in step 217 that the timing where sampling is necessary has been reached, in step 218, the first communication control device 26 communicates, based on the routing information 75 and using the second communication mode 26y (that is, using the individual IDs 72), with each of the plurality of remote terminals 50 directly or via at least one repeater 30 and acquires the data 45 from the sensor 40 of each remote terminal 50. The measurement data 45 obtained from each remote terminal 50 may be stored in the memory 22 of the base terminal 20 as a measurement database (library) 25, and may be uploaded to the server 90 via the network (cloud) 9.

At a repeater 30, in step 302, the first communication control device 36 performs communication via the first communication device (specified low-power wireless unit) 51 with the base terminal 20 and the remote terminals 50 using the grouping information 78, which was acquired by the second communication control device 37 via the second communication unit (BLE communication unit) 52 and stored in the memory 32. **In** step 311, the first communication control device 36 of the repeater 30 sends a response to the call with (using) the group ID (first identification information) 71 from the base terminal 20, which was received via the first communication unit 51, in step 312 by including its own individual ID (second identification information) 72. During communication in the group using the first communication unit 51, it is possible to use other information for communication using the first communication unit 51, such as a frequency channel number included in the group information 77 and the grouping information 78.

If, in step 313, there has also been a request from the base terminal 20 (that is, a command made via the first communication unit 51), in step 314 the first communication control device 36 of a repeater 30 calls, via the first communication unit 51 and using the first communication mode 36x, a plurality of remote terminals 50 regardless of whether there has been a response using the group ID (first identification information) 71, and in step 315, acquires the individual IDs (second identification information) 72 and the signal levels 79 of the plurality of remote terminals 50 that responded, and sends the acquired information in reply to the base terminal 20. In step 315, the individual IDs 72 of other repeaters 30 that have responded to the collective call (the first communication mode 36x) using the group ID 71 from the repeater 30 may also be fed back to the base terminal 20. Through this process, the base terminal 20 can collect the individual IDs 72 and communication strengths (reception levels) 79 of the remote terminals 50 and the repeaters 30 that can be called via a repeater 30. This means that the base terminal 20 can determine whether to call a specified remote terminal 50 included in the group 70 directly or via one or more repeaters 30 and can more appropriately generate the routing information 75 for the sensor network 65 composed of the remote terminals 50 that have been grouped using a group ID.

In addition, when instructed in step 316 by a command from the base terminal 20 including the individual ID 72 of the repeater 30, in step 317 the first communication control apparatus 36 of the repeater 30 calls one out of the plurality of remote terminals 50 included in the group in the second communication mode 36y, using the individual ID (second identification information) 72 of the remote terminal 50 included in the command, acquires the data 45 from the sensor 40 from that remote terminal 50, and sends the data 45 in reply to the base terminal 20. The command used by the base terminal 20 to call the remote terminal 50 via the repeater 30 may include the individual ID 72 of the repeater 30 to be intermediated for calling and the individual ID 72 of the remote terminal to be called via such repeater 30, as one example, "#R1 #1".

At the remote terminal (slave terminal) 50, in step 502, the second communication control device 57 acquires the grouping information 78 via the BLE communication unit 52 and stores the grouping information 78 in the memory 55. When a sampling start instruction has been given in step 510, sampling starts, and after this the first communication control device 56 communicates with the base terminal 20 or a repeater 30 via the first communication device (specified low-power wireless unit) 51 based on the grouping information 78. First, in step 511, when it is determined that the timing to perform sampling has been reached, in step 512 the value of a built-in or connected sensor 40 is measured and the measurement data 45 is stored in the memory 55. In step 513, when a call with the group ID (first identification information) 71 has been received from the base terminal 20 or the repeater 30 via the first communication device 51, in step 514, the first communication control device 56 sends a response including its own individual ID (second identification information) 72. On the other hand, in step 515, when a call with the individual ID (second identification information) 72 has been received via the first communication unit 51 from the base terminal 20 or the repeater 30, the first communication control device 56 sends a response in step 516 by including the data 45 from the sensor 40.

By repeating these steps at each remote terminal 50, measured values of the sensors 40 are automatically sampled, a remote terminal 50 can automatically respond to a call with a group ID 71 from the base terminal 20 when the routing is updated, and the remote terminal 50 can automatically respond to a call from the base terminal 20 for the collection of the sampling data 45 using the individual IDs 72. Accordingly, the remote terminal 50 does not need to have information on the route by which the remote terminal 50 is connected or communicating to the base terminal 20 on the sensor network 65, and by merely responding to a call from the base terminal 20 or a repeater 30 using the group ID 71 or the individual ID 72, the remote terminals 50 can function as terminals 60 that construct the sensor network 65. The same applies to the repeaters 30. In addition, by providing the individual ID 72 in response to a call to the group ID 71 from the base terminal 20 or a repeater 30, each remote terminal 50 can provide the information that is necessary for configuring or reconfiguring the sensor network 65 to the base terminal 20, which means that even in an environment where a plurality of groups coexist, it is possible to flexibly reconfigure a sensor network 65 in which communication can be reliably performed in a unit of group and that can respond and vary appropriately to changes in environment. Even if the base terminal 20 has changed the routing of the sensor network 65 flexibly or dynamically in a unit of group, it is possible for the remote terminals 50 to act in keeping with such changes. The same applies to the repeaters 30.

Fig. 3 depicts an example configuration of the sensor network 65. One example of routing in the sensor network 65 is indicated by solid lines. As one example, in step 212, the remote terminal #1, the remote terminal #2, the repeater #R1, the repeater #R2, and the repeater #R3 respond to a collective call made using the first communication mode 26x. In step 214, the remote terminal #3, the remote terminal #4, and the remote terminal #5 respond to a collective call made using the first communication mode 36x via the repeater #R1. The remote terminal #6 responds to a collective call made using the first communication mode 36x via the repeater #R2. The repeater #R4 responds to a collective call made using the first communication mode 36x via the repeater #R3. The remote terminal #7 and the remote terminal #8 respond to a collective call made using the first communication mode 36x via the repeater #R4. Based on this information, in step 216, the base terminal 20 generates the routing information 75 that directly calls the remote terminals #1 and #2, calls the remote terminal #3, the remote terminal #4, and the remote terminal #5 via the repeater #R1, and calls the remote terminal #7 and the remote terminal #8 via the repeater #R3 and the repeater #R4. After this, in step 216, the remote terminals #1 to #8 are sequentially called in accordance with the routing information 75 in the second communication mode 26y or a combination of the second communication modes 26y and 36y to collect the data 45 of the respective sensors 40.

On the other hand, if the remote terminal #3 has responded to a call from the base terminal 20 in the first communication mode 26x, the base terminal 20 may generate the routing information 75 whereby the base terminal 20 directly calls the remote terminal #3 in the second communication mode 26y, as indicated by the broken line 69a. By doing so, it is possible to reduce the number of calls to the repeater #R1 and the number of calls to the remote terminal #3 via the repeater #R1, and possible to reduce the time taken to collect the sampling data 45. The power consumption of the repeater #R1 can also be reduced. On the other hand, if the remote terminal #7 has responded to a call in the first communication mode 36x of the repeater #R1 and the remote terminal #8 has responded to a call in the first communication mode 36x of the repeater #R2, as indicated by the broken lines 69b, the routing information 75 whereby the remote terminal #7 is called via the repeater #R1 and the remote terminal #8 is called via the repeater #R2 in the second communication mode 26y may be generated. By doing so, the repeater #R3 and the repeater #R4 are not required to call the remote terminals #1 to #8, which means that such repeaters 30 can be kept in an idle state. In addition, when the repeater #R4 has responded to a call in the first communication mode 36x from the repeater #R2, as indicated by the broken line 69c, it is possible to call the remote terminal #8 via the repeater #R4 without passing via the repeater #R3.

The communication state between the remote terminals 50 and the base terminal 20 or repeaters 30 that construct the sensor network 65 may change depending on not only the distances between the terminals but also the presence or absence of obstacles, the presence or absence of noise, and the like. Accordingly, by collectively calling the remote terminals 50 directly and via the repeaters 30 at appropriate timing in the first communication mode 26x using the group ID 71, the base terminal 20 is capable of confirming the communication environments for the respective remote terminals 50 in the group, so that a sensor network 65 of a configuration that is suited to the acquisition of the sampling data 45 from the respective remote terminals 50 can be automatically generated flexibly or dynamically in group units.

As one example, even when communication has been successfully established in test communication performed by disposing the data collection apparatus 20 as a base terminal and the terminals 50 as remote terminals at predetermined locations set in advance and further disposing repeaters 30 in locations where it is believed relaying will be necessary, there can still be cases where it subsequently becomes possible to perform communication without relaying, or no longer possible to communicate. By making the network 65 reconfigurable, even if the installed locations of the repeaters 30 and remote terminals 50 belonging to the group have changed from their initial installed locations, it is possible to reconstruct communication paths (routes) that are optimal for the new state. In a network that involves communication, the communication state can be affected by even changes that may seem trivial, like those as indicated below.
- The strength of the radio waves may change depending on the opening and closing of door or doors along the route.
- The signal strength may change depending on the locations of cargo along the route (for example, whether a warehouse is empty or fully loaded with cargo).
- In a greenhouse, polytunnel, or the like, the strength of radio waves may change depending on how thick the plants are.
- In environments where people gather, the signal strength may change depending on the state of the crowd.
By making the network 65 reconfigurable, it is possible to provide a system 1 that can flexibly respond (adapt) to such changes in the environment.

The base terminal 20 may determine whether to call directly or to call via an appropriate repeater or repeaters 30 based on the signal strengths 79 of the remote terminals 50 that have responded to a collective call. As described earlier, the signal strength 79 may include information on signal quality. Furthermore, when generating the routing information 75, the base terminal 20 may perform routing according to a rule that gives priority to the signal strength 79, may perform routing according to a rule that reduces the number of repeaters 30 passed through to call a remote terminal 50, or may perform routing according to other rules. During routing, the conditions for determining "no response" based on the presence or absence of a response from a remote terminal 50 or a repeater 30 include when a response could not be received within a predetermined period from a call and when the reception level 79 is equal to or below a predetermined value. In addition, if the above does not apply and "response given" has been determined, a response with the highest signal level 79 may be used in a case where responses have been obtained from the remote terminals 50 via a route that passes through a plurality of repeaters 30.

Also, when a repeater 30 communicates with a plurality of remote terminals 50, the amount of communication of the repeater will be a multiple of the amount of communication of a remote terminal 50. This means that power consumption tends to increase, and the time taken by communication also tends to increase. Accordingly, a route that can call a remote terminal 50 without passing via a repeater 30 may be preferentially used. Depending on the communication environment of a remote terminal 50, the base terminal 20 may not be able to communicate with that remote terminal 50 without passing via a repeater 30, and although it is necessary to dispose a sufficient number of repeaters 30 at appropriate positions, priority may be given to communicating with the remote terminals 50 without passing via the repeaters 30. **In** the system 1 that includes a plurality of the terminals 60 that construct this sensor network 65, the base terminal 20 automatically performs routing (rerouting) based on the communication environment with remote terminals 50. This means that it is possible to automatically configure a sensor network 65 that enables communication with the remote terminals 50 and reducing communication to the remote terminals 50 and to the repeaters 30. This system 1 can configure a sensor network 65 that allows the remote terminals 50 to move within a range that can be covered by the repeaters 30, and even if one of the repeaters 30 becomes unable to communicate for some reason, it is possible to configure a sensor network 65 where this can be automatically backed up using other routes.

Note that although specified low-power wireless (400 MHz) is used as one example of the first communication device (first wireless unit) 51 that constructs the communication network 65 between the plurality of communication terminals 60 included in the system 1 in the embodiment described above, the communication unit may be specified low-power wireless (900 MHz), or may be a communication unit that uses a communication method capable of another form of low-power communication, such as ZigBee (registered trademark). The remote terminals 50 and the repeaters 30 may operate on batteries, so that it is desirable for power consumption required by communication to be low. Accordingly, the first communication device 51 may be any communication unit that is not installed in the host 10 as standard, is easy to customize, and is suited to reducing power consumption.

On the other hand, although a BLE communication unit has been described as the second communication device (second communication unit) 52 connected to the host 10, the second communication device 52 may be a different general-purpose communication unit, such as a communication unit installed as standard in the host 10, for example, a wireless LAN unit.

Note that although specific embodiments of the present invention have been described above, various other embodiments and modifications will be conceivable to those of skill in the art without departing from the scope of the invention.
Such other embodiments and modifications are addressed by the scope of the patent claims given below, and the present invention is defined by the scope of these patent claims.

## Claims

1. A data collection apparatus (20) comprising:
a first communication device (51) capable of communicating directly, or via at least one repeater (30), with a plurality of terminals (50) that each acquire data from a sensor; (30)
a memory (22) for storing common first identification information for grouping at least a part of a set of the plurality of terminals (50) and at least one repeater (30), and second identification information for individually identifying each out of the grouped plurality of terminals (50) and the grouped at least one repeater (30); and
a first communication control device (26) that is configured to control communication with the plurality of terminals (50) and the at least one repeater (30) via the first communication device (51),
wherein the first communication control device (26) includes:
a first communication mode (26x) for communicating with the plurality of terminals (50) and the at least one repeater (30) using the first identification information;
a second communication mode (26y) for individually communicating with the plurality of terminals (50) and the at least one repeater (30) using the second identification information;
a first call controller (26a) that is configured to call, using the first communication mode (26x), the plurality of terminals (50) and the at least one repeater (30) regardless of whether there has been a response, and acquire the second identification information and a reception level of each of the plurality of terminals (50) and the at least one repeater (30) that have responded;
a second call controller (26b) that is configured to call, using the second communication mode (26y), via the at least one repeater (30) from which the second identification information has been obtained, at least the plurality of terminals (50) regardless of whether there has been a response using the first identification information, and acquire the second identification information and a reception level of each of the plurality of terminals (50) that have responded; and
a sampling controller (26d) that is configured to communicate, using the second communication mode (26y), on a route that is set based on the reception levels acquired by the first call controller (26a) and the second call controller (26b), directly or via the at least one repeater (30) with each of the plurality of terminals (50) that have been grouped using the first identification information, and collect data from the sensors of the plurality of terminals (50) that have been grouped by the first identification information.

2. The data collection apparatus (20) according to claim 1,
further comprising a general-purpose second communication device (52) capable of communicating with a general-purpose information processing apparatus; and
a second communication control device (27) that is configured to acquire group information, which includes the first identification information and the second identification information of the plurality of terminals (50) and the at least one repeater (30) grouped by the first identification information, via the second communication device (52) and store the group information in the memory (22).

3. The data collection apparatus (20) according to claim 2,
wherein the general-purpose information processing apparatus includes one of a tablet terminal and a smartphone terminal.

4. The data collection apparatus (20) according to claim 2 or 3,
wherein the first communication device (51) includes a device that is configured to perform specific low-power wireless communication, and
the second communication device (52) includes a device that is configured to perform BLE communication.

5. A repeater (30) for relaying communication between a data collection apparatus (20) and a plurality of terminals (50), comprising:
a first communication device (51) capable of relaying communication between a plurality of terminals (50), which each acquire data from a sensor, and the data collection apparatus (20);
a memory (32) for storing first identification information for grouping at least a part of a set of the plurality of terminals (50) and the repeater (30) and second identification information that is unique to the repeater (30); and
a first communication control device (26) that is configured to control communication via the first communication device (51),
wherein the first communication control device (26) includes:
a first communication mode (26x) for communicating with the plurality of terminals (50) using the first identification information;
a second communication mode (26y) for communicating each of the plurality of terminals (50) using the second identification information;
a first response controller (26a) that is configured to send a response including the second identification information, to a call with the first identification information received by the first communication device (51);
a first repeat controller (36b) that is configured to call using the first communication mode (26x), according to a request from the data collection apparatus (20), at least the plurality of terminals (50) regardless of whether there has been a response, acquire the second identification information and a reception level of at least the plurality of terminals (50) that have responded, and send the second identification information and the reception level in reply to the data collection apparatus (20); and
a second repeat controller (36c) that is configured to call one out of the plurality of terminals (50) in the second communication mode (26y) using the second identification information that has been instructed from the data collection apparatus (20), acquire data from the sensor of the terminal, and send the data in reply to the data collection apparatus (20).

6. The repeater (30) according to claim 5,
further comprising a general-purpose second communication device (52) capable of communicating with a general-purpose information processing apparatus; and
a second communication control device (37) that is configured to acquire grouping information, which includes the first identification information and the second identification information, via the second communication device (52) and store the grouping information in the memory (32).

7. A system comprising
the data collection apparatus (20) according to one of the claims 1 to 4;
a plurality of the terminals (50) that communicate with the data collection apparatus (20) as a base terminal, and
at least one repeater (30) according to claim 5 or 6 that relays communication with the data collection apparatus (20) as the base terminal and the plurality of terminals (50) as remote terminals.

8. The system according to claim 7,
wherein each of the plurality of the terminals (50) comprises;
a sampler (56c) that is configured to acquire data from a sensor (40);
a first communication device (51) capable of communicating with the data collection apparatus (20) directly or via at least one repeater (30);
a memory (55) for storing the first identification information and second identification information that is unique to the terminal; and
a first communication control device (56) that is configured to control communication via the first communication device (51), and
wherein the first communication control device (56) includes:
a first response controller (56a) that is configured to send a response including the second identification information to a call with the first identification information received by the first communication device (51); and
a second response controller (56b) that is configured to send a response including the data from the sensor (40) to a call with the second identification information received by the first communication device (51).

9. The system according to claim 8,
each of the plurality of the terminals (50) further comprises a general-purpose second communication device (52) capable of communicating with a general-purpose information processing apparatus; and
a second communication control device (57) that is configured to acquire grouping information, which includes the first identification information and the second identification information, via the second communication device (52) and store the grouping information in the memory (55).

10. The system according to one of the claims 7 to 9,
wherein the data collection apparatus (20), the plurality of terminals (50), and the at least one repeater (30) each include a general-purpose second communication device (52) capable of communicating with a general-purpose information processing apparatus,
the plurality of terminals (50) and the at least one repeater (30) each include a communication control device that is configured to acquire grouping information, which includes the first identification information and the second identification information, via the second communication apparatus and store the grouping information in the memory, and
the data collection apparatus (20) includes a communication control device that is configured to acquire, via the second communication device (52), group information including the first identification information and the second identification information of the plurality of terminals (50) and the at least one repeater (30) that have been grouped using the first identification information, and store the group information in the memory (22) of the data collection apparatus (20).

11. The system according to claim 10,
further comprising the information processing apparatus that includes the general-purpose second communication device (52) and a control device that controls communication by the second communication device (52),
wherein the control device of the information processing apparatus includes a network configurator, and
the network configurator executes:
establishing communication with and identifying each of the data collection apparatus (20), the plurality of terminals (50), and the at least one repeater (30) via the second communication device;
grouping by assigning the first identification information to at least a part of a set of the data collection apparatus (20), the plurality of terminals (50), and the at least one repeater (30) that have been identified;
supplying the grouping information, which includes the common first identification information and the individual second identification information, to the plurality of terminals (50) and the at least one repeater (30) that have been grouped; and
supplying the group information, which includes the first identification information and the second identification information of the plurality of terminals (50) and the at least one repeater (30) that have been grouped, to the grouped data collection apparatus.

12. A control method for controlling a data collection apparatus (20), which includes a first communication device (51) capable of communicating with a plurality of terminals (50), which each acquire data from a sensor, directly or via at least one repeater (30),
wherein the data collection apparatus (20) includes:
a memory (22) for storing common first identification information for grouping at least a part of a set of the plurality of terminals (50) and the at least one repeater (30), and second identification information for individually identifying each of the grouped plurality of terminals (50) and the at least one repeater (30); and
a communication control device (26) that controls communication via the first communication device (51),
and
the communication control apparatus includes a first communication mode (26x) for communicating with the plurality of terminals (50) and the at least one repeater (30) using the first identification information and a second communication mode (26y) for individually communicating with the plurality of terminals (50) and the at least one repeater (30) using the second identification information,
the control method comprising:
calling, by the communication control device (26), using the first communication mode (26x), the plurality of terminals (50) and the at least one repeater (30) regardless of whether there has been a response, and acquiring the second identification information and a reception level of each of the plurality of terminals (50) and the at least one repeater (30) that have responded;
calling, using the second communication mode (26y), via the at least one repeater (30) from which the second identification information has been obtained, at least the plurality of terminals (50) regardless of whether there has been a response using the first identification information, and acquiring the second identification information and a reception level of each of the plurality of terminals (50) that have responded; and
communicating, using the second communication mode (26y), on a route that is set based on the acquired reception levels, directly or via the at least one repeater (30) with each of the plurality of terminals (50) that have been grouped using the first identification information, and collecting data from the sensors (40) of the plurality of terminals (50) that have been grouped by the first identification information.

13. The control method according to claim 12,
wherein the data collection apparatus (20) further includes a general-purpose second communication device (52) capable of communicating with a general-purpose information processing apparatus; and
the control method further comprises acquiring group information, which includes the first identification information and the second identification information of the plurality of terminals (50) and the at least one repeater (30) grouped by the first identification information, via the second communication device (52) and storing the group information in the memory.

14. A method of performing communication in a system including
a data collection apparatus (20) performing the steps according to one of the claims 12 or 13,
wherein the system further includes a plurality of the terminals (50) that communicate with the data collection apparatus as a base terminal, and at least one repeater (30) that relays communication with the data collection apparatus (20) as the base terminal and the plurality of terminals (50) as remote terminals, and
each of the data collection apparatus (20), the plurality of terminals (50), and the at least one repeater (30) includes a general-purpose second communication device (52) capable of communicating with a general-purpose information processing apparatus,
the method comprising:
acquiring, by each of the plurality of terminals (50) and the at least one repeater (30), grouping information, which includes the first identification information and the second identification information, via the second communication device and storing the grouping information in the memories respectively; and
acquiring, by the data collection apparatus (20), group information, which includes the first identification information and the second identification information of the plurality of terminals (50) and the at least one repeater (30) that are to be grouped by the first identification information, via the second communication device (52) and storing the group information in the memory (22) of the data collection apparatus (20).

15. The method according to claim 14,
wherein the system further includes the information processing apparatus that includes the general-purpose second communication device (52), and
the method further comprises:
establishing, by the information processing apparatus, communication with and identifying each of the data collection apparatus (20), the plurality of terminals (50), and the at least one repeater (30) via the second communication device (52);
grouping by assigning the first identification information to at least a part of a set of the data collection apparatus (20), the plurality of terminals (50), and the at least one repeater (30) that have been identified;
supplying the grouping information, which includes the common first identification information and the individual second identification information, to the plurality of terminals (50) and the at least one repeater (30) that have been grouped; and
supplying the group information, which includes the first identification information, and the second identification information of the plurality of terminals (50) and the at least one repeater (30) that have been grouped, to the grouped data collection apparatus.

## Patentansprüche

1. Eine Datenerfassungsvorrichtung (20), aufweisend:
eine erste Kommunikationsvorrichtung (51), die in der Lage ist, direkt oder über zumindest einen Repeater (30) mit einer Mehrzahl an Endgeräten (50) zu kommunizieren, die jeweils Daten von einem Sensor erfassen; (30)
einen Speicher (22) zum Speichern gemeinsamer erster Identifikationsinformation zum Gruppieren zumindest eines Teils einer Menge der Mehrzahl an Endgeräten (50) und des zumindest einen Repeaters (30) sowie zweiter Identifikationsinformation zum individuellen Identifizieren jedes einzelnen der gruppierten mehreren Endgeräte (50) und des gruppierten zumindest einen Repeaters (30); und
eine erste Kommunikationssteuervorrichtung (26), ausgebildet, um die Kommunikation mit der Mehrzahl an Endgeräten (50) und dem zumindest einen Repeater (30) über die erste Kommunikationsvorrichtung (51) zu steuern,
wobei die erste Kommunikationssteuervorrichtung (26) aufweist:
einen ersten Kommunikationsmodus (26x) zum Kommunizieren mit der Mehrzahl an Endgeräten (50) und dem zumindest einen Repeater (30) unter Verwendung der ersten Identifikationsinformation;
einen zweiten Kommunikationsmodus (26y) zum individuellen Kommunizieren mit der Mehrzahl an Endgeräten (50) und dem zumindest einen Repeater (30) unter Verwendung der zweiten Identifikationsinformation;
eine erste Anrufsteuerung (26a), ausgebildet um, unter Verwendung des ersten Kommunikationsmodus (26x), die Mehrzahl an Endgeräten (50) und den zumindest einen Repeater (30) anzurufen, unabhängig davon, ob eine Antwort erfolgt ist, und um die zweite Identifikationsinformation sowie einen Empfangspegel jedes der Mehrzahl an Endgeräten (50) und des zumindest einen Repeaters (30), die geantwortet haben, zu erfassen;
eine zweite Anrufsteuerung (26b), ausgebildet um, unter Verwendung des zweiten Kommunikationsmodus (26y), über den zumindest einen Repeater (30), von dem die zweite Identifikationsinformation erhalten wurde, zumindest die Mehrzahl an Endgeräten (50) anzurufen, unabhängig davon, ob unter Verwendung der ersten Identifikationsinformation eine Antwort erfolgt ist, und um die zweite Identifikationsinformation sowie einen Empfangspegel jedes der Mehrzahl an Endgeräten (50), die geantwortet haben, zu erfassen; und
eine Abtaststeuerung (26d), ausgebildet um, unter Verwendung des zweiten Kommunikationsmodus (26y) auf einer Route, die auf der Grundlage der von der ersten Anrufsteuerung (26a) und der zweiten Anrufsteuerung (26b) erfassten Empfangspegel festgelegt wird, direkt oder über den zumindest einen Repeater (30) mit jedem der Mehrzahl an Endgeräten (50) zu kommunizieren, die unter Verwendung der ersten Identifikationsinformation gruppiert wurden, und Daten von den Sensoren der Mehrzahl an Endgeräten (50) zu erfassen, die durch die erste Identifikationsinformation gruppiert wurden.

2. Die Datenerfassungsvorrichtung (20) nach Anspruch 1,
ferner aufweisend eine universell einsetzbare zweite Kommunikationsvorrichtung (52), die in der Lage ist, mit einer universell einsetzbaren Informationsverarbeitungsvorrichtung zu kommunizieren; und
eine zweite Kommunikationssteuervorrichtung (27), ausgebildet, um Gruppeninformation, welche die erste Identifikationsinformation und die zweite Identifikationsinformation der Mehrzahl an Endgeräten (50) und des zumindest einen Repeaters (30) enthält, die anhand der ersten Identifikationsinformation gruppiert wurden, über die zweite Kommunikationsvorrichtung (52) zu erfassen und die Gruppeninformation im Speicher (22) zu speichern.

3. Die Datenerfassungsvorrichtung (20) nach Anspruch 2,
wobei die universell einsetzbare Informationsverarbeitungsvorrichtung entweder ein Tablet-Endgerät oder ein Smartphone-Endgerät umfasst.

4. Die Datenerfassungsvorrichtung (20) nach Anspruch 2 oder 3,
wobei die erste Kommunikationsvorrichtung (51) eine Vorrichtung umfasst, ausgebildet, um eine spezifische drahtlose Kommunikation mit geringem Stromverbrauch durchzuführen, und
die zweite Kommunikationsvorrichtung (52) eine Vorrichtung umfasst, ausgebildet, um eine BLE-Kommunikation durchzuführen.

5. Ein Repeater (30) zum Weiterleiten der Kommunikation zwischen einer Datenerfassungsvorrichtung (20) und einer Mehrzahl an Endgeräten (50), aufweisend:
eine erste Kommunikationsvorrichtung (51), die in der Lage ist, die Kommunikation zwischen einer Mehrzahl an Endgeräten (50), die jeweils Daten von einem Sensor erfassen, und der Datenerfassungsvorrichtung (20) weiterzuleiten;
einen Speicher (32) zum Speichern erster Identifikationsinformation zum Gruppieren zumindest eines Teils einer Menge der Mehrzahl an Endgeräten (50) und des Repeaters (30) sowie zweiter, für den Repeater (30) einzigartiger Identifikationsinformation; und
eine erste Kommunikationssteuervorrichtung (26), ausgebildet, um die Kommunikation über die erste Kommunikationsvorrichtung (51) zu steuern,
wobei die erste Kommunikationssteuervorrichtung (26) aufweist:
einen ersten Kommunikationsmodus (26x) zum Kommunizieren mit der Mehrzahl an Endgeräten (50) unter Verwendung der ersten Identifikationsinformation;
einen zweiten Kommunikationsmodus (26y) zum Kommunizieren mit jedem der Mehrzahl an Endgeräten (50) unter Verwendung der zweiten Identifikationsinformation;
eine erste Antwortsteuerung (26a), ausgebildet, um auf einen die erste Identifikationsinformation enthaltenden Anruf, der von der ersten Kommunikationsvorrichtung (51) empfangen wurde, eine die zweite Identifikationsinformation enthaltende Antwort zu senden;
eine erste Repeater-Steuerung (36b), ausgebildet, um unter Verwendung des ersten Kommunikationsmodus (26x), nach einer Anforderung von der Datenerfassungsvorrichtung (20), zumindest die Mehrzahl an Endgeräten (50) anzurufen, unabhängig davon, ob eine Antwort erfolgt ist, die zweite Identifikationsinformation und einen Empfangspegel zumindest der Mehrzahl an Endgeräten (50), die geantwortet haben, zu erfassen und die zweite Identifikationsinformation und den Empfangspegel als Antwort an die Datenerfassungsvorrichtung (20) zu senden; und
eine zweite Repeater-Steuerung (36c), ausgebildet, um im zweiten Kommunikationsmodus (26y), unter Verwendung der von der Datenerfassungsvorrichtung (20) übermittelten zweiten Identifikationsinformation, eines der Mehrzahl an Endgeräten (50) anzurufen, Daten vom Sensor des Endgeräts zu erfassen und die Daten als Antwort an die Datenerfassungsvorrichtung (20) zu senden.

6. Der Repeater (30) nach Anspruch 5,
ferner aufweisend eine universell einsetzbare zweite Kommunikationsvorrichtung (52), die in der Lage ist, mit einer universell einsetzbaren Informationsverarbeitungsvorrichtung zu kommunizieren; und
eine zweite Kommunikationssteuervorrichtung (37), ausgebildet, um, über die zweite Kommunikationsvorrichtung (52), die erste Identifikationsinformation und die zweite Identifikationsinformation enthaltende Gruppierungsinformation zu erfassen und die Gruppierungsinformation im Speicher (32) zu speichern.

7. Ein System, aufweisend
die Datenerfassungsvorrichtung (20) nach einem der Ansprüche 1 bis 4;
eine Mehrzahl an Endgeräten (50), die mit der Datenerfassungsvorrichtung (20) als Basisendgerät kommunizieren, und
zumindest einen Repeater (30) nach Anspruch 5 oder 6, der die Kommunikation mit der Datenerfassungsvorrichtung (20) als Basisendgerät und der Mehrzahl an Endgeräten (50) als Fern-Endgeräte weiterleitet.

8. Das System nach Anspruch 7,
wobei jedes der Mehrzahl an Endgeräten (50) aufweist:
einen Abtaster (56c), ausgebildet, um Daten von einem Sensor (40) zu erfassen;
eine erste Kommunikationsvorrichtung (51), die in der Lage ist, direkt oder über zumindest einen Repeater (30) mit der Datenerfassungsvorrichtung (20) zu kommunizieren;
einen Speicher (55) zum Speichern der ersten Identifikationsinformation und der zweiten Identifikationsinformation, die für das Endgerät einzigartig ist; und
eine erste Kommunikationssteuervorrichtung (56), ausgebildet, um die Kommunikation über die erste Kommunikationsvorrichtung (51) zu steuern, und
wobei die erste Kommunikationssteuervorrichtung (56) aufweist:
eine erste Antwortsteuerung (56a), ausgebildet, um auf einen von der ersten Kommunikationsvorrichtung (51) empfangenen Anruf mit der ersten Identifikationsinformation eine die zweite Identifikationsinformation enthaltende Antwort zu senden; und
eine zweite Antwortsteuerung (56b), ausgebildet, um auf einen von der ersten Kommunikationsvorrichtung (51) empfangenen Anruf mit der zweiten Identifikationsinformation eine die Daten vom Sensor (40) enthaltende Antwort zu senden.

9. Das System nach Anspruch 8,
wobei jedes der Mehrzahl an Endgeräten (50) ferner eine universell einsetzbare zweite Kommunikationsvorrichtung (52) aufweist, die in der Lage ist, mit einer universell einsetzbaren Informationsverarbeitungsvorrichtung zu kommunizieren; und
eine zweite Kommunikationssteuervorrichtung (57), ausgebildet, um über die zweite Kommunikationsvorrichtung (52) die erste Identifikationsinformation und die zweite Identifikationsinformation enthaltende Gruppierungsinformation zu erfassen und die Gruppierungsinformation im Speicher (55) zu speichern.

10. Das System nach einem der Ansprüche 7 bis 9,
wobei die Datenerfassungsvorrichtung (20), die Mehrzahl an Endgeräten (50) und der zumindest eine Repeater (30) jeweils eine universell einsetzbare zweite Kommunikationsvorrichtung (52) aufweisen, die in der Lage ist, mit einer universell einsetzbaren Informationsverarbeitungsvorrichtung zu kommunizieren,
die Mehrzahl an Endgeräten (50) und der zumindest eine Repeater (30) jeweils eine Kommunikationssteuervorrichtung aufweisen, die ausgebildet ist, um Gruppierungsinformation, welche die erste Identifikationsinformation und die zweite Identifikationsinformation enthält, über die zweite Kommunikationsvorrichtung zu erfassen und die Gruppierungsinformation im Speicher zu speichern, und
die Datenerfassungsvorrichtung (20) eine Kommunikationssteuervorrichtung aufweist, die ausgebildet ist, um über die zweite Kommunikationsvorrichtung (52) Gruppeninformation zu erfassen, welche die erste Identifikationsinformation und die zweite Identifikationsinformation der Mehrzahl an Endgeräten (50) und des zumindest einen Repeaters (30) enthält, die unter Verwendung der ersten Identifikationsinformation gruppiert wurden, und um die Gruppeninformation im Speicher (22) der Datenerfassungsvorrichtung (20) zu speichern.

11. Das System nach Anspruch 10,
ferner aufweisend die Informationsverarbeitungsvorrichtung, welche die universell einsetzbare zweite Kommunikationsvorrichtung (52) enthält, sowie eine Steuervorrichtung, welche die Kommunikation durch die zweite Kommunikationsvorrichtung (52) steuert,
wobei die Steuervorrichtung der Informationsverarbeitungsvorrichtung einen Netzwerkkonfigurator enthält, und
der Netzwerkkonfigurator Folgendes ausführt:
Herstellen einer Kommunikation mit und Identifizieren jeder der Datenerfassungsvorrichtungen (20), der Mehrzahl an Endgeräten (50) und des zumindest einen Repeaters (30) über die zweite Kommunikationsvorrichtung;
Gruppieren, durch Zuweisen der ersten Identifikationsinformation zu zumindest einem Teil einer Menge der Datenerfassungsvorrichtungen (20), der Mehrzahl an Endgeräten (50) und des zumindest einen Repeaters (30), die identifiziert wurden;
Bereitstellen der Gruppierungsinformation, die die gemeinsame erste Identifikationsinformation und die individuelle zweite Identifikationsinformation enthält, an die Mehrzahl an Endgeräten (50) und den zumindest einen Repeater (30), die gruppiert wurden; und
Bereitstellen der Gruppeninformation, welche die erste Identifikationsinformation und die zweite Identifikationsinformation der Mehrzahl an Endgeräten (50) und des zumindest einen Repeaters (30), die gruppiert wurden, enthält, an die gruppierte Datenerfassungsvorrichtung.

12. Ein Steuerverfahren zum Steuern einer Datenerfassungsvorrichtung (20), die eine erste Kommunikationsvorrichtung (51) enthält, welche in der Lage ist, mit einer Mehrzahl an Endgeräten (50) zu kommunizieren, von denen jedes Daten von einem Sensor direkt oder über zumindest einen Repeater (30) erfasst,
wobei die Datenerfassungsvorrichtung (20) aufweist:
einen Speicher (22) zum Speichern gemeinsamer erster Identifikationsinformation zum Gruppieren zumindest eines Teils einer Menge der Mehrzahl an Endgeräten (50) und des zumindest einen Repeaters (30), sowie zweiter Identifikationsinformation zum individuellen Identifizieren jedes der gruppierten mehreren Endgeräte (50) und des zumindest einen Repeaters (30); und
eine Kommunikationssteuervorrichtung (26), die die Kommunikation über die erste Kommunikationsvorrichtung (51) steuert, und
wobei die Kommunikationssteuervorrichtung einen ersten Kommunikationsmodus (26x) aufweist, zum Kommunizieren mit der Mehrzahl an Endgeräten (50) und dem zumindest einen Repeater (30) unter Verwendung der ersten Identifikationsinformation, sowie einen zweiten Kommunikationsmodus (26y), zum individuellen Kommunizieren mit der Mehrzahl an Endgeräten (50) und dem zumindest einen Repeater (30) unter Verwendung der zweiten Identifikationsinformation,
wobei das Steuerverfahren umfasst:
Anrufen der Mehrzahl an Endgeräten (50) und des zumindest einen Repeaters (30) durch die Kommunikationssteuerungsvorrichtung (26) unter Verwendung des ersten Kommunikationsmodus (26x), unabhängig davon, ob eine Antwort erfolgt ist, und Erfassen der zweiten Identifikationsinformation und eines Empfangspegels jedes der Mehrzahl an Endgeräten (50) und des zumindest einen Repeaters (30), die geantwortet haben;
Anrufen, unter Verwendung des zweiten Kommunikationsmodus (26Y), über den zumindest einen Repeater (30), von dem die zweite Identifikationsinformation erhalten wurde, zumindest der Mehrzahl an Endgeräten (50), unabhängig davon, ob eine Antwort unter Verwendung der ersten Identifikationsinformation erfolgt ist, und Erfassen der zweiten Identifikationsinformation und eines Empfangspegels jedes der Mehrzahl an Endgeräten (50), die geantwortet haben; und
Kommunizieren, unter Verwendung des zweiten Kommunikationsmodus (26Y), auf einer Route, die auf der Grundlage der erfassten Empfangspegel festgelegt wird, direkt oder über den zumindest einen Repeater (30), mit jedem der Mehrzahl an Endgeräten (50), die unter Verwendung der ersten Identifikationsinformation gruppiert wurden, und Sammeln von Daten von den Sensoren (40) der Mehrzahl an Endgeräten (50), die durch die ersten Identifikationsinformation gruppiert wurden.

13. Das Steuerverfahren nach Anspruch 12,
wobei die Datenerfassungsvorrichtung (20) ferner eine universell einsetzbare zweite Kommunikationsvorrichtung (52) enthält, die in der Lage ist, mit einer universell einsetzbaren Informationsverarbeitungsvorrichtung zu kommunizieren; und
das Steuerverfahren ferner das Erfassen von Gruppeninformation, welche die erste Identifikationsinformation und die zweite Identifikationsinformation der Mehrzahl an Endgeräten (50) und des zumindest einen Repeaters (30), die anhand der ersten Identifikationsinformation gruppiert wurden, enthält, über die zweite Kommunikationsvorrichtung (52) umfasst, sowie das Speichern der Gruppeninformation im Speicher.

14. Ein Verfahren zur Durchführung einer Kommunikation in einem System, das eine Datenerfassungsvorrichtung (20) enthält, wobei die Schritte nach einem der Ansprüche 12 oder 13 durchgeführt werden,
wobei das System ferner eine Mehrzahl an Endgeräten (50) enthält, die mit der Datenerfassungsvorrichtung als Basisendgerät kommunizieren, sowie zumindest einen Repeater (30), welcher die Kommunikation mit der Datenerfassungsvorrichtung (20) als Basisendgerät und der Mehrzahl an Endgeräten (50) als Fern-Endgeräte weiterleitet, und
jede der Datenerfassungsvorrichtungen (20), die Mehrzahl an Endgeräten (50) und der zumindest eine Repeater (30) eine universell einsetzbare zweite Kommunikationsvorrichtung (52) enthält, die in der Lage ist, mit einer universell einsetzbaren Informationsverarbeitungsvorrichtung zu kommunizieren,
wobei das Verfahren umfasst:
Erfassen von Gruppierungsinformation, die die erste Identifikationsinformation und die zweite Identifikationsinformation enthält, durch jedes der Mehrzahl an Endgeräten (50) und den zumindest einen Repeater (30) über die zweite Kommunikationsvorrichtung, und Speichern der Gruppierungsinformation in die jeweiligen Speicher; und
Erfassen, durch die Datenerfassungsvorrichtung (20), von Gruppeninformation, wobei die Gruppeninformation die erste Identifikationsinformation und die zweite Identifikationsinformation der Mehrzahl an Endgeräten (50) und des zumindest einen Repeaters (30) enthält, die anhand der ersten Identifikationsinformation gruppiert werden sollen, über die zweite Kommunikationsvorrichtung (52) und Speichern der Gruppeninformation im Speicher (22) der Datenerfassungsvorrichtung (20).

15. Das Verfahren nach Anspruch 14,
wobei das System ferner die Informationsverarbeitungsvorrichtung aufweist, welche die universell einsetzbare zweite Kommunikationsvorrichtung (52) enthält, und
wobei das Verfahren ferner umfasst:
Herstellen, durch die Informationsverarbeitungsvorrichtung, einer Kommunikation mit und Identifizieren jeder der Datenerfassungsvorrichtungen (20), der Mehrzahl an Endgeräten (50) und des zumindest einen Repeaters (30) über die zweite Kommunikationsvorrichtung (52);
Gruppieren, durch Zuweisen der ersten Identifikationsinformationen zu zumindest einem Teil einer Menge der Datenerfassungsvorrichtungen (20), der Mehrzahl an Endgeräten (50) und des zumindest einen Repeaters (30), die identifiziert wurden;
Bereitstellen der Gruppierungsinformation, welche die gemeinsame erste Identifikationsinformation und die individuelle zweite Identifikationsinformation enthält, an die Mehrzahl an Endgeräten (50) und den zumindest einen Repeater (30), die gruppiert wurden; und
Bereitstellen der Gruppeninformation, welche die erste Identifikationsinformation und die zweite Identifikationsinformation der Mehrzahl an Endgeräten (50) und des zumindest einen Repeaters (30), die gruppiert wurden, enthält, an die gruppierte Datenerfassungsvorrichtung.

## Revendications

1. Appareil de collecte de données (20), comprenant :
un premier dispositif de communication (51) capable de communiquer directement, ou par l'intermédiaire d'au moins un répéteur (30), avec une pluralité de terminaux (50) qui acquièrent chacun des données en provenance d'un capteur ; (30)
une mémoire (22) destinée à stocker des premières informations d'identification communes, pour grouper au moins une partie d'un ensemble de la pluralité de terminaux (50) et d'au moins un répéteur (30), et des secondes informations d'identification, pour identifier individuellement chacun parmi la pluralité groupée de terminaux (50) et l'au moins un répéteur groupé (30) ; et
un premier dispositif de commande de communication (26) qui est configuré pour commander la communication avec la pluralité de terminaux (50) et l'au moins un répéteur (30) par l'intermédiaire du premier dispositif de communication (51),
dans lequel le premier dispositif de commande de communication (26) inclut :
un premier mode de communication (26x) pour communiquer avec la pluralité de terminaux (50) et l'au moins un répéteur (30) en utilisant les premières informations d'identification ;
un second mode de communication (26y) pour communiquer individuellement avec la pluralité de terminaux (50) et l'au moins un répéteur (30) en utilisant les secondes informations d'identification ;
une première unité de commande d'appel (26a) qui est configurée pour appeler, en utilisant le premier mode de communication (26x), la pluralité de terminaux (50) et l'au moins un répéteur (30) indépendamment du fait qu'il y a eu une réponse ou non, et acquérir les secondes informations d'identification et un niveau de réception de chacun parmi la pluralité de terminaux (50) et l'au moins un répéteur (30) qui ont répondu ;
une seconde unité de commande d'appel (26b) qui est configurée pour appeler, en utilisant le second mode de communication (26y), par l'intermédiaire de l'au moins un répéteur (30) en provenance duquel les secondes informations d'identification ont été obtenues, au moins la pluralité de terminaux (50) indépendamment du fait qu'il y a eu une réponse ou non en utilisant les premières informations d'identification, et acquérir les secondes informations d'identification et un niveau de réception de chacun parmi la pluralité de terminaux (50) qui ont répondu ; et
une unité de commande d'échantillonnage (26d) qui est configurée pour communiquer, en utilisant le second mode de communication (26y), sur un chemin qui est réglé sur la base des niveaux de réception acquis par la première unité de commande d'appel (26a) et la seconde unité de commande d'appel (26b), directement ou par l'intermédiaire de l'au moins un répéteur (30) avec chacun parmi la pluralité de terminaux (50) qui ont été groupés en utilisant les premières informations d'identification, et collecter des données en provenance des capteurs de la pluralité de terminaux (50) qui ont été groupés par les premières informations d'identification.

2. Appareil de collecte de données (20) selon la revendication 1,
comprenant en outre un dispositif de communication à usage général (52) capable de communiquer avec un appareil de traitement d'informations à usage général ; et
un second dispositif de commande de communication (27) qui est configuré pour acquérir des informations de groupe, qui incluent les premières informations d'identification et les secondes informations d'identification de la pluralité de terminaux (50) et de l'au moins un répéteur (30) groupés par les premières informations d'identification, par l'intermédiaire du second dispositif de communication (52) et stocker les informations de groupe dans la mémoire (22).

3. Appareil de collecte de données (20) selon la revendication 2,
dans lequel l'appareil de traitement d'informations à usage général inclut un terminal parmi un terminal tablette et un terminal téléphone multifonction.

4. Appareil de collecte de données (20) selon la revendication 2 ou 3,
dans lequel le premier dispositif de communication (51) inclut un dispositif qui est configuré pour réaliser une communication sans fil basse puissance spécifique, et
le second dispositif de communication (52) inclut un dispositif qui est configuré pour réaliser une communication BLE.

5. Répéteur (30) destiné à relayer une communication entre un appareil de collecte de données (20) et une pluralité de terminaux (50), comprenant :
un premier dispositif de communication (51) capable de relayer une communication entre une pluralité de terminaux (50), qui acquièrent chacun des données en provenance d'un capteur, et l'appareil de collecte de données (20) ;
une mémoire (32) destinée à stocker des premières informations d'identification, pour grouper au moins une partie d'un ensemble de la pluralité de terminaux (50) et du répéteur (30), et des secondes informations d'identification qui sont uniques au répéteur (30) ; et
un premier dispositif de commande de communication (26) qui est configuré pour commander la communication par l'intermédiaire du premier dispositif de communication (51),
dans lequel le premier dispositif de commande de communication (26) inclut :
un premier mode de communication (26x) pour communiquer avec la pluralité de terminaux (50) en utilisant les premières informations d'identification ;
un second mode de communication (26y) pour communiquer avec chacun parmi la pluralité de terminaux (50) en utilisant les secondes informations d'identification ;
une première unité de commande de réponse (26a) qui est configurée pour envoyer une réponse, incluant les secondes informations d'identification, à un appel avec les premières informations d'identification reçues par le premier dispositif de communication (51) ;
une première unité de commande de répétition (36b) qui est configurée pour appeler en utilisant le premier mode de communication (26x), selon une demande en provenance de l'appareil de collecte de données (20), au moins la pluralité de terminaux (50) indépendamment du fait qu'il y a eu une réponse ou non, acquérir les secondes informations d'identification et un niveau de réception d'au moins la pluralité de terminaux (50) qui ont répondu, et envoyer les secondes informations d'identification et le niveau de réception en réplique à l'appareil de collecte de données (20) ; et
une seconde unité de commande de répétition (36c) qui est configurée pour appeler un terminal parmi la pluralité de terminaux (50) dans le second mode de communication (26y) en utilisant les secondes informations d'identification dont l'instruction a été effectuée en provenance de l'appareil de collecte de données (20), acquérir des données en provenance du capteur du terminal, et envoyer les données en réplique à l'appareil de collecte de données (20).

6. Répéteur (30) selon la revendication 5,
comprenant en outre un dispositif de communication à usage général (52) capable de communiquer avec un appareil de traitement d'informations à usage général ; et
un second dispositif de commande de communication (37) qui est configuré pour acquérir des informations de groupement, qui incluent les premières informations d'identification et les secondes informations d'identification, par l'intermédiaire du second dispositif de communication (52) et stocker les informations de groupement dans la mémoire (32).

7. Système, comprenant
l'appareil de collecte de données (20) selon l'une des revendications 1 à 4 ;
une pluralité des terminaux (50) qui communiquent avec l'appareil de collecte de données (20) en tant que terminal de base, et
au moins un répéteur (30) selon la revendication 5 ou 6 qui relaye une communication avec l'appareil de collecte de données (20) en tant que terminal de base et la pluralité de terminaux (50) en tant que terminaux à distance.

8. Système selon la revendication 7,
dans lequel chacun parmi la pluralité des terminaux (50) comprend ;
un échantillonneur (56c) qui est configuré pour acquérir des données en provenance d'un capteur (40) ;
un premier dispositif de communication (51) capable de communiquer avec l'appareil de collecte de données (20) directement ou par l'intermédiaire d'au moins un répéteur (30) ;
une mémoire (55) destinée à stocker les premières informations d'identification et les secondes informations d'identification qui sont uniques au terminal ; et
un premier dispositif de commande de communication (56) qui est configuré pour commander la communication par l'intermédiaire du premier dispositif de communication (51), et
dans lequel le premier dispositif de commande de communication (56) inclut :
une première unité de commande de réponse (56a) qui est configurée pour envoyer une réponse incluant les secondes informations d'identification à un appel avec les premières informations d'identification reçues par le premier dispositif de communication (51) ; et
une seconde unité de commande de réponse (56b) qui est configurée pour envoyer une réponse incluant les données en provenance du capteur (40) à un appel avec les secondes informations d'identification reçues par le premier dispositif de communication (51).

9. Système selon la revendication 8,
chacun parmi la pluralité des terminaux (50) comprend en outre un dispositif de communication à usage général (52) capable de communiquer avec un appareil de traitement d'informations à usage général ; et
un second dispositif de commande de communication (57) qui est configuré pour acquérir des informations de groupement, qui incluent les premières informations d'identification et les secondes informations d'identification, par l'intermédiaire du second dispositif de communication (52) et stocker les informations de groupement dans la mémoire (55).

10. Système selon l'une des revendications 7 à 9,
dans lequel l'appareil de collecte de données (20), la pluralité de terminaux (50), et l'au moins un répéteur (30) incluent chacun un dispositif de communication à usage général (52) capable de communiquer avec un appareil de traitement d'informations à usage général,
la pluralité de terminaux (50) et l'au moins un répéteur (30) incluent chacun un dispositif de commande de communication qui est configuré pour acquérir des informations de groupement, qui incluent les premières informations d'identification et les secondes informations d'identification, par l'intermédiaire du second dispositif de communication et stocker les informations de groupement dans la mémoire, et
l'appareil de collecte de données (20) inclut un dispositif de commande de communication qui est configuré pour acquérir, par l'intermédiaire du second dispositif de communication (52), des informations de groupe incluant les premières informations d'identification et les secondes informations d'identification de la pluralité de terminaux (50) et de l'au moins un répéteur (30) qui ont été groupés en utilisant les premières informations d'identification, et stocker les informations de groupe dans la mémoire (22) de l'appareil de collecte de données (20).

11. Système selon la revendication 10,
comprenant en outre l'appareil de traitement d'informations qui inclut le dispositif de communication à usage général (52) et un dispositif de commande qui commande la communication par le second dispositif de communication (52),
dans lequel le dispositif de commande de l'appareil de traitement d'informations inclut un configurateur de réseau, et
le configurateur de réseau exécute :
l'établissement d'une communication avec chacun, et l'identification de chacun, parmi l'appareil de collecte de données (20), la pluralité de terminaux (50), et l'au moins un répéteur (30) par l'intermédiaire du second dispositif de communication ;
le groupement d'au moins une partie d'un ensemble de l'appareil de collecte de données (20), de la pluralité de terminaux (50), et de l'au moins un répéteur (30), qui ont été identifiés, en attribuant les premières informations d'identification à ceux-ci ;
la fourniture des informations de groupement, qui incluent les premières informations d'identification communes et les secondes informations d'identification individuelles, à la pluralité de terminaux (50) et à l'au moins un répéteur (30) qui ont été groupés ; et
la fourniture des informations de groupe, qui incluent les premières informations d'identification et les secondes informations d'identification de la pluralité de terminaux (50) et de l'au moins un répéteur (30) qui ont été groupés, à l'appareil de collecte de données groupé.

12. Procédé de commande pour commander un appareil de collecte de données (20), qui inclut un premier dispositif de communication (51) capable de communiquer avec une pluralité de terminaux (50), qui acquièrent chacun des données en provenance d'un capteur, directement ou par l'intermédiaire d'au moins un répéteur (30),
dans lequel l'appareil de collecte de données (20) inclut :
une mémoire (22) destinée à stocker des premières informations d'identification communes pour grouper au moins une partie d'un ensemble de la pluralité de terminaux (50) et de l'au moins un répéteur (30), et des secondes informations d'identification pour identifier individuellement chacun parmi la pluralité groupée de terminaux (50) et l'au moins un répéteur (30) ; et
un dispositif de commande de communication (26) qui commande la communication par l'intermédiaire du premier dispositif de communication (51), et
l'appareil de commande de communication inclut un premier mode de communication (26x) pour communiquer avec la pluralité de terminaux (50) et l'au moins un répéteur (30) en utilisant les premières informations d'identification et un second mode de communication (26y) pour communiquer individuellement avec la pluralité de terminaux (50) et l'au moins un répéteur (30) en utilisant les secondes informations d'identification,
le procédé de commande comprenant :
l'appel, par le dispositif de commande de communication (26), en utilisant le premier mode de communication (26x), de la pluralité de terminaux (50) et de l'au moins un répéteur (30) indépendamment du fait qu'il y a eu une réponse ou non, et l'acquisition des secondes informations d'identification et d'un niveau de réception de chacun parmi la pluralité de terminaux (50) et l'au moins un répéteur (30) qui ont répondu ;
l'appel, en utilisant le second mode de communication (26y), par l'intermédiaire de l'au moins un répéteur (30) en provenance duquel les secondes informations d'identification ont été obtenues, d'au moins la pluralité de terminaux (50) indépendamment du fait qu'il y a eu une réponse ou non en utilisant les premières informations d'identification, et l'acquisition des secondes informations d'identification et d'un niveau de réception de chacun parmi la pluralité de terminaux (50) qui ont répondu ; et
la communication, en utilisant le second mode de communication (26y), sur un chemin qui est réglé sur la base des niveaux de réceptions acquis, directement ou par l'intermédiaire de l'au moins un répéteur (30), avec chacun parmi la pluralité de terminaux (50) qui ont été groupés en utilisant les premières informations d'identification, et la collecte de données en provenance des capteurs (40) de la pluralité de terminaux (50) qui ont été groupés par les premières informations d'identification.

13. Procédé de commande selon la revendication 12,
dans lequel l'appareil de collecte de données (20) inclut en outre un dispositif de communication à usage général (52) capable de communiquer avec un appareil de traitement d'informations à usage général ; et
le procédé de commande comprend en outre l'acquisition d'informations de groupe, qui incluent les premières informations d'identification et les secondes informations d'identification de la pluralité de terminaux (50) et de l'au moins un répéteur (30) groupés par les premières informations d'identification, par l'intermédiaire du second dispositif de communication (52), et le stockage des informations de groupe dans la mémoire.

14. Procédé de réalisation d'une communication dans un système incluant un appareil de collecte de données (20) réalisant les étapes selon l'une des revendications 12 ou 13,
dans lequel le système inclut en outre une pluralité des terminaux (50) qui communiquent avec l'appareil de collecte de données en tant que terminal de base, et au moins un répéteur (30) qui relaye une communication avec l'appareil de collecte de données (20) en tant que terminal de base et la pluralité de terminaux (50) en tant que terminaux à distance, et
chacun parmi l'appareil de collecte de données (20), la pluralité de terminaux (50), et l'au moins un répéteur (30) inclut un dispositif de communication à usage général (52) capable de communiquer avec un appareil de traitement d'informations à usage général, le procédé comprenant :
l'acquisition, par chacun parmi la pluralité de terminaux (50) et l'au moins un répéteur (30), d'informations de groupement, qui incluent les premières informations d'identification et les secondes informations d'identification, par l'intermédiaire du second dispositif de communication, et le stockage des informations de groupement dans les mémoires respectivement ; et
l'acquisition, par l'appareil de collecte de données (20), d'informations de groupe, qui incluent les premières informations d'identification et les secondes informations d'identification de la pluralité de terminaux (50) et de l'au moins un répéteur (30) qui doivent être groupés par les premières informations d'identification, par l'intermédiaire du second dispositif de communication (52), et le stockage des informations de groupe dans la mémoire (22) de l'appareil de collecte de données (20).

15. Procédé selon la revendication 14,
dans lequel le système inclut en outre l'appareil de traitement d'informations qui inclut le dispositif de communication à usage général (52), et
le procédé comprend en outre :
l'établissement, par l'appareil de traitement d'informations, d'une communication avec chacun, et l'identification de chacun, parmi l'appareil de collecte de données (20), la pluralité de terminaux (50), et l'au moins un répéteur (30), par l'intermédiaire du second dispositif de communication (52) ;
le groupement d'au moins une partie d'un ensemble de l'appareil de collecte de données (20), de la pluralité de terminaux (50), et de l'au moins un répéteur (30), qui ont été identifiés, en attribuant les premières informations d'identification à ceux-ci ;
la fourniture des informations de groupement, qui incluent les premières informations d'identification communes et les secondes informations d'identification individuelles, à la pluralité de terminaux (50) et à l'au moins un répéteur (30) qui ont été groupés ; et
la fourniture des informations de groupe, qui incluent les premières informations d'identification et les secondes informations d'identification de la pluralité de terminaux (50) et de l'au moins un répéteur (30) qui ont été groupés, à l'appareil de collecte de données groupé.
